(19) Europäisches Patentamt / European Patent Office / Office européen des brevets

(11) **EP 3 146 653 B1**

(12) **EUROPEAN PATENT SPECIFICATION**

(45) Date of publication and mention
of the grant of the patent:
**13.06.2018 Bulletin 2018/24**

(51) Int Cl.:
*H04B 10/2513* [(2013.01)]   *H04B 10/2569* [(2013.01)]
*H04B 10/2543* [(2013.01)]

(21) Application number: **14729905.1**

(22) Date of filing: **13.06.2014**

(86) International application number:
**PCT/EP2014/062361**

(87) International publication number:
**WO 2015/188872 (17.12.2015 Gazette 2015/50)**

(54) **AN APPARATUS FOR DETERMINING A SIGNAL DISTORTION OF AN OPTICAL SIGNAL**

VORRICHTUNG ZUR BESTIMMUNG EINER SIGNALVERZERRUNG EINES OPTISCHEN SIGNALS

APPAREIL DE DÉTERMINATION DE DISTORSION DE SIGNAL DE SIGNAL OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2017 Bulletin 2017/13**

(73) Proprietor: **HUAWEI TECHNOLOGIES CO., LTD.
Shenzhen Guangdong 518129 (CN)**

(72) Inventors:
• **GOEGER, Gernot
80992 Munich (DE)**
• **YE, Yabin
80992 Munich (DE)**

(74) Representative: **Gill Jennings & Every LLP
The Broadgate Tower
20 Primrose Street
London EC2A 2ES (GB)**

(56) References cited:
US-A1- 2004 052 522    US-A1- 2009 135 408
US-B1- 7 558 479

• Mark D Pelusi ET AL: "Optically tunable compensation of nonlinear signal distortion in optical fiber by end-span optical phase conjugation References and links 7 / OPTICS EXPRESS 8015", Science IEEE Commun. Mag. J. Lightwave Technol. Bell Syst. Tech. J. J. Lightwave Technol. Lightwave Technol. Adv. Opt. Photon. Opt. Fiber Technol. IEEE Sel. Top. Quantum Electron. Opt. Express IEEE Photon. Technol. Lett. Electron. Lett. Opt. Lett. Op, 1 January 2010 (2010-01-01), pages 327-328, XP055173772, Retrieved from the Internet: URL:http://www.opticsinfobase.org/DirectPD FAccess/F114860F-AEAD-39A1-DB488BE18289 FC4 5_231244/oe-20-7-8015.pdf?da=1&id=231244&s eq=0&mobile=no [retrieved on 2015-03-04]
• A O Lima ET AL: "Comparison of penalties resulting from first-order and all-order polarization mode dispersion distortions in optical fiber transmission systems", Optics letters, 1 March 2003 (2003-03-01), page 310, XP055173821, United States Retrieved from the Internet: URL:http://www.ncbi.nlm.nih.gov/pubmed/126 59428 [retrieved on 2015-03-03]
• Pierluigi Poggiolini ET AL: "A Detailed Analytical Derivation of the GN Model of Non-Linear Interference in Coherent Optical Transmission Systems", , 3 September 2012 (2012-09-03), XP055174044, Retrieved from the Internet: URL:http://arxiv.org/abs/1209.0394 [retrieved on 2015-03-03]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to the field of optical communication systems.

BACKGROUND OF THE INVENTION

In an optical communication system, a transmission of an optical signal over a transmission channel can be impeded due to linear and nonlinear signal distortions.

Linear and nonlinear signal distortions can e.g. be introduced by transmission of the optical signal over a number of fiber transmission spans of the optical transmission channel and can e.g. result from chromatic dispersion (CD), polarization mode dispersion (PMD), and/or an optical Kerr effect. For an optical signal comprising a number of frequency channels, the nonlinear signal distortions can be classified according to their origin into self- and cross-channel interaction related distortions.

In coherent detection receivers, digital signal processing assisted techniques for estimating and compensating linear signal distortions e.g. induced by CD and PMD of the transmission spans can be employed. For a high regenerator-less reach of an optical communication system, however, nonlinear signal distortions can emerge. In case the optical signal is propagated along low-dispersion fiber and/or dispersion-managed fiber links, apart from CD also PMD can have an impact on nonlinear signal distortions.

Currently, there exists no efficient model or technique for considering combined effects, e.g. due to CD, PMD, and/or an optical Kerr effect, when determining a signal distortion of an optical signal in an optical communication system.

In P. Poggiolini, G. Bosco, A. Carena, V. Curri, and F. Forghieri, "A Detailed Analytical Derivation of the GN Model of Non-Linear Interference in Coherent Optical Transmission Systems", a Gaussian noise (GN) model of nonlinear interference is described.

In E. Seve, P. Ramantanis, J.-C. Antona, E. Grellier, O. Rival, F. Vacondio, and S. Bigo, "Semi-Analytical Model for the Performance Estimation of 100Gb/s PDM-QPSK Optical Transmission Systems without Inline Dispersion Compensation and Mixed Fiber Types", Proc. ECOC 2013, a model for performance estimation of an optical communication system is described.

In P. Serena, N. Rossi, and A. Bononi, "Nonlinear Penalty Reduction Induced by PMD in 112Gbit/s WDM PDM-QPSK Coherent Systems", Proc. ECOC 2009, a nonlinear penalty reduction induced by polarization mode dispersion (PMD) is described.

US 2009/0135408 relates to method for reducing the uncertainty of the measured average PMD of a long fiber. US 2004/0052522 relates to optical performance monitor utilizing nonlinear detection.

SUMMARY OF THE INVENTION

It is an object of the invention to provide an efficient concept for determining a signal distortion of an optical signal.

This object is achieved by the features of the independent claims. Further implementation forms are apparent from the dependent claims, the description and the figures.

The invention is based on the finding that a signal distortion of an optical signal can be considered by introducing distortion measures indicating a nonlinear signal distortion induced on single transmission spans, and by introducing distortion measures indicating correlations between nonlinear signal distortions induced on different transmission spans. The distortion measures can efficiently be combined for determining the signal distortion of the optical signal. Therefore, nonlinear channel interaction on a number of fiber spans can be considered influenced by chromatic dispersion (CD) as well as by polarization mode dispersion (PMD) effects.

According to a first aspect, the invention relates to an apparatus for determining a signal distortion of an optical signal, as defined in claim 1. Thus, an efficient concept for determining a signal distortion of an optical signal can be realized.

The correlation between nonlinear signal distortions of the optical signal induced on transmission span (i) and on transmission span (k) can relate to a correlation of nonlinear signal distortions on transmission span (i) and transmission span (k). The correlation can take a value within a predetermined interval, e.g. the interval [-1, 1].

In a first implementation form of the apparatus according to the first aspect as such, the apparatus comprises a database for providing the number of signal powers, the number of chromatic dispersion values, or the number of differential group delay values, and wherein the provider is configured to retrieve the number of signal powers, the number of chromatic dispersion values, or the number of differential group delay values from the database. Thus, the number of signal powers, the number of chromatic dispersion values, or the number of differential group delay values can be provided efficiently.

The determiner can be configured to store the number of first distortion measures ($\kappa$) or the number of second distortion measures ($\rho$) in the database. The determiner can further be configured to retrieve at least one of the number of first distortion measures ($\kappa$) or the number of second distortion measures ($\rho$) from the database.

In a second implementation form of the apparatus according to the first aspect as such or the first implementation form of the first aspect, the determiner is configured to determine a distorted electrical field vector of the optical signal for each frequency channel (m) and for each transmission span (i, k) to obtain a number of distorted electrical field vectors, wherein the number of distorted electrical field vectors is associated to the number of chromatic dispersion values and the number of differential group delay values, and wherein the determiner is configured to determine the number of first distortion measures ($\kappa$) or the number of second distortion measures ($\rho$) upon the basis of the number of distorted electrical field vectors. Thus, the number of first distortion measures ($\kappa$) or the number of second distortion measures ($\rho$) can be determined efficiently. The determiner can be configured to determine the number of distorted electrical field vectors upon the basis of an electromagnetic and/or optical field simulation technique.

In a third implementation form of the apparatus according to the second implementation form of the first aspect, the determiner is configured to determine a linear signal distortion of the optical signal for each frequency channel (m) and for each transmission span (i, k) to obtain a number of linear signal distortions, and wherein the determiner is configured to compensate the number of distorted electrical field vectors by the number of linear signal distortions. Thus, the number of distorted electrical field vectors can be compensated efficiently. The determiner can be configured to determine the number of linear signal distortions upon the basis of an electromagnetic and/or optical field simulation technique.

In a fourth implementation form of the apparatus according to the second implementation form or the third implementation form of the first aspect, the determiner is configured to determine an average nonlinear phase rotation of the optical signal for each frequency channel (m) and for each transmission span (i, k) to obtain a number of nonlinear phase rotations, and wherein the determiner is configured to compensate the number of distorted electrical field vectors by the number of nonlinear phase rotations. Thus, the number of distorted electrical field vectors can be compensated efficiently. The average nonlinear phase rotation of the optical signal can be constant for the optical signal and may not depend on time and/or a time per symbol. The determiner can be configured to determine the number of nonlinear phase rotations upon the basis of an electromagnetic and/or optical field simulation technique.

In a fifth implementation form of the apparatus according to the second implementation form to the fourth implementation form of the first aspect, the determiner is configured to determine an undistorted electrical field vector of the optical signal for each frequency channel (m) and for each transmission span (i, k) to obtain a number of undistorted electrical field vectors, and wherein the determiner is configured to compensate the number of distorted electrical field vectors by the number of undistorted electrical field vectors. Thus, the number of distorted electrical field vectors can be compensated efficiently. The determiner can be configured to determine the number of undistorted electrical field vectors upon the basis of an electromagnetic and/or optical field simulation technique.

In a sixth implementation form of the apparatus according to the first aspect as such or the first implementation form to the fifth implementation form of the first aspect, the determiner is configured to arrange the number of first distortion measures ($\kappa$) to form a two-dimensional array of first distortion measures ($\kappa$), and wherein the combiner is configured to combine the number of signal powers, the number of first distortion measures ($\kappa$), and the number of second distortion measures ($\rho$) upon the basis of the two-dimensional array of first distortion measures ($\kappa$). Thus, the number of signal powers, the number of first distortion measures ($\kappa$), and the number of second distortion measures ($\rho$) can be combined efficiently.

In a seventh implementation form of the apparatus according to the first aspect as such or the first implementation form to the sixth implementation form of the first aspect, the determiner is configured to arrange the number of second distortion measures ($\rho$) to form a four-dimensional array of second distortion measures ($\rho$), and wherein the combiner is configured to combine the number of signal powers, the number of first distortion measures ($\kappa$), and the number of second distortion measures ($\rho$) upon the basis of the four-dimensional array of second distortion measures ($\rho$). Thus, the number of signal powers, the number of first distortion measures ($\kappa$), and the number of second distortion measures ($\rho$) can be combined efficiently.

In an eighth implementation form of the apparatus according to the seventh implementation form of the first aspect, the determiner is configured to decompose the four-dimensional array of second distortion measures ($\rho$) into a first decomposed two-dimensional array of second distortion measures ($\rho$) and a second decomposed two-dimensional array of second distortion measures ($\rho$), and wherein the combiner is configured to combine the number of signal powers, the number of first distortion measures ($\kappa$), and the number of second distortion measures ($\rho$) upon the basis of the first decomposed two-dimensional array of second distortion measures ($\rho$) and the second decomposed two-dimensional array of second distortion measures ($\rho$). Thus, the number of signal powers, the number of first distortion measures ($\kappa$), and the number of second distortion measures ($\rho$) can be combined efficiently.

In a ninth implementation form of the apparatus according to the eighth implementation form of the first aspect, the determiner is configured to decompose the four-dimensional array of second distortion measures ($\rho$) into the first

decomposed two-dimensional array of second distortion measures ($\rho$) and the second decomposed two-dimensional array of second distortion measures ($\rho$) according to the following equation:

$$\rho_m \left( CD_i, DGD_i, CD_k, DGD_k \right) \approx \rho_m \left( CD_i, CD_k \right) \cdot$$

$$\rho_{m,corr} \left( CD = \min\left( CD_i, CD_k \right), \Delta DGD = \sqrt{\left| DGD_i^2 - DGD_k^2 \right|} \right)$$

wherein $\rho$ denotes a second distortion measure, CD denotes a chromatic dispersion value, DGD denotes a differential group delay value, i denotes a transmission span index, k denotes a further transmission span index, m denotes a frequency channel index, $\rho_m(CD_i,DGD_i,CD_k,DGD_k)$ denotes the four-dimensional array of second distortion measures, $\rho_m(CD_i,CD_k)$ denotes the first decomposed two-dimensional array of second distortion measures, and

$$\rho_{m,corr} \left( CD = \min\left( CD_i, CD_k \right), \Delta DGD = \sqrt{\left| DGD_i^2 - DGD_k^2 \right|} \right)$$ denotes the second decomposed two-dimensional array of second distortion measures. Thus, the four-dimensional array can be decomposed efficiently.

In a tenth implementation form of the apparatus according to the first aspect as such or the first implementation form to the tenth implementation form of the first aspect, the combiner is configured to combine the number of signal powers, the number of first distortion measures ($\kappa$), and the number of second distortion measures ($\rho$) according to the following equation:

$$SNR_{nonlinear\,noise,j}^{-1} = \sigma_{nonlinear\,noise,j}^2 \Big/ P_j = \sum_{i,k=1}^{N_{span}} \sum_{m=1}^{N_{channel}} \sqrt{\kappa_m \left( CD_i, DGD_i \right) \kappa_m \left( CD_k, DGD_k \right)} \cdot$$

$$\cdot \rho_m \left( CD_i, DGD_i, CD_k, DGD_k \right) \left( 2 - \delta_{ik} \right) P_{i,m}\, P_{k,m}$$

wherein $SNR_{nonlinear\,noise}$ denotes a signal-to-noise ratio of the optical signal induced by nonlinear signal distortion, $\sigma_{nonlinear\,noise}$ denotes a standard deviation of nonlinear signal distortion of the optical signal, CD denotes a chromatic dispersion value, DGD denotes a differential group delay value, $\kappa$ denotes a first distortion measure, $\rho$ denotes a second distortion measure, P denotes a signal power, $\delta$ denotes a Kronecker-Delta, j denotes a frequency channel index, m denotes a further frequency channel index, i denotes a transmission span index, k denotes a further transmission span index, $N_{span}$ denotes the number of transmission spans, and $N_{channel}$ denotes the number of frequency channels. Thus, the number of signal powers, the number of first distortion measures ($\kappa$), and the number of second distortion measures ($\rho$) can be combined efficiently. The signal-to-noise ratio of the optical signal can indicate the signal distortion of the optical signal.

In a twelfth implementation form of the apparatus according to the eleventh implementation form of the first aspect, the combiner is configured to determine an excess optical signal-to-noise ratio of the signal induced by nonlinear signal distortion upon the basis of the signal-to-noise ratio according to the following equation:

$$\Delta OSNR_j [dB] = -10 \lg \left( 1 - ROSNR_{btb}\, SNR_{nonlinear\,noise,j}^{-1} \right)$$

wherein $\Delta OSNR$ denotes the excess optical signal-to-noise ratio of the signal, $SNR_{nonlinear\,noise}$ denotes the signal-to-noise ratio, $ROSNR_{btb}$ denotes a reference optical signal-to-noise ratio, and j denotes a frequency channel index. Thus, an excess optical signal-to-noise ratio of the signal can be determined efficiently.

According to a second aspect, the invention relates to a method for determining a signal distortion of an optical signal, as defined in claim 13. Thus, an efficient concept for determining a signal distortion of an optical signal can be realized.

The method can be performed by the apparatus. Further features of the method directly result from the functionality of the apparatus.

According to a third aspect, the invention relates to a computer program comprising a program code for performing the method when executed on a computer. Thus, the method can be performed in an automatic and repeatable manner.

The apparatus can be programmably arranged to execute the computer program.

The invention can be implemented in hardware and/or software.

Further implementation forms of the invention will be described with respect to the following figures, in which:

Fig. 1 shows a diagram of an apparatus for determining a signal distortion of an optical signal according to an implementation form;

Fig. 2 shows a diagram of a method for determining a signal distortion of an optical signal according to an implementation form;

Fig. 3 shows a diagram of an apparatus for determining a signal distortion of an optical signal according to an implementation form;

Fig. 4 shows diagrams for illustrating a performance of determining a signal distortion of an optical signal according to an implementation form;

Fig. 5 shows a contour diagram for illustrating a performance of determining a signal distortion of an optical signal according to an implementation form;

Fig. 6 shows diagrams for illustrating a performance of determining a signal distortion of an optical signal according to an implementation form;

Fig. 7 shows a diagram of an optical transmission channel having a number of transmission spans according to an implementation form;

Fig. 8 shows a diagram for illustrating a performance of determining a signal distortion of an optical signal according to an implementation form;

Fig. 9 shows a diagram for illustrating a performance of determining a signal distortion of an optical signal according to an implementation form;

Fig. 10 shows a diagram for illustrating a performance of determining a signal distortion of an optical signal according to an implementation form;

Fig. 11 shows contour diagrams for illustrating a performance of determining a signal distortion of an optical signal according to an implementation form;

Fig. 12 shows a diagram for illustrating a performance of determining a signal distortion of an optical signal according to an implementation form;

Fig. 13 shows contour diagrams for illustrating a performance of determining a signal distortion of an optical signal according to an implementation form; and

Fig. 14 shows diagrams for illustrating a performance of determining a signal distortion of an optical signal according to an implementation form.

## DETAILED DESCRIPTION OF IMPLEMENTATION FORMS OF THE INVENTION

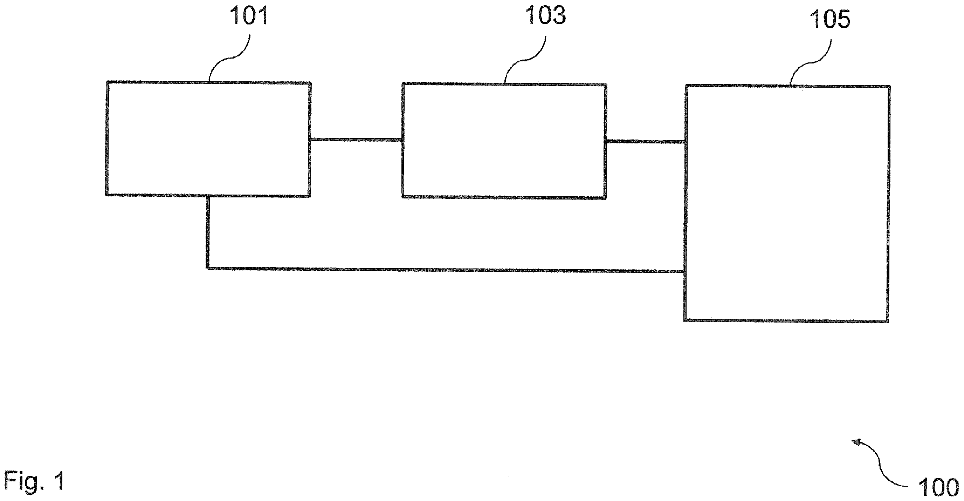

Fig. 1 shows a diagram of an apparatus 100 for determining a signal distortion of an optical signal according to an implementation form. The optical signal comprises a number of frequency channels (m). The signal distortion is introduced by an optical transmission channel having a number of transmission spans (i, k).

The apparatus 100 comprises a provider 101 being configured to provide a signal power (P) of the optical signal for each frequency channel (m) and for each transmission span (i, k) to obtain a number of signal powers, to provide a chromatic dispersion, CD, value for each frequency channel (m) and for each transmission span (i, k) to obtain a number of chromatic dispersion values, the number of chromatic dispersion values indicating a chromatic dispersion of the optical signal, and to provide a differential group delay, DGD, value for each frequency channel (m) and for each transmission span (i, k) to obtain a number of differential group delay values, the number of differential group delay values indicating a polarization mode dispersion of the optical signal, a determiner 103 being configured to determine a number of first distortion measures ($\kappa$) upon the basis of the number of chromatic dispersion values and the number of differential group delay values, the number of first distortion measures ($\kappa$) indicating a nonlinear signal distortion of the optical signal induced on a single transmission span (i, k), and to determine a number of second distortion measures (ρ) upon the basis of the number of chromatic dispersion values and the number of differential group delay values, the number of second distortion measures (ρ) indicating a correlation between nonlinear signal distortions of the optical signal induced on transmission span (i) and on transmission span (k), and a combiner 105 being configured to combine the number of signal powers, the number of first distortion measures (κ), and the number of second distortion measures (ρ) to obtain the signal distortion of the optical signal.

The apparatus 100 can comprise a database for providing the number of signal powers, the number of chromatic dispersion values, or the number of differential group delay values, wherein the provider 101 can be configured to retrieve the number of signal powers, the number of chromatic dispersion values, or the number of differential group delay values from the database.

The determiner 103 can be configured to store the number of first distortion measures (κ) or the number of second distortion measures (ρ) in the database. The determiner 103 can further be configured to retrieve the number of first distortion measures (κ) or the number of second distortion measures (ρ) from the database.

The apparatus 100 can be programmably arranged to execute a computer program.

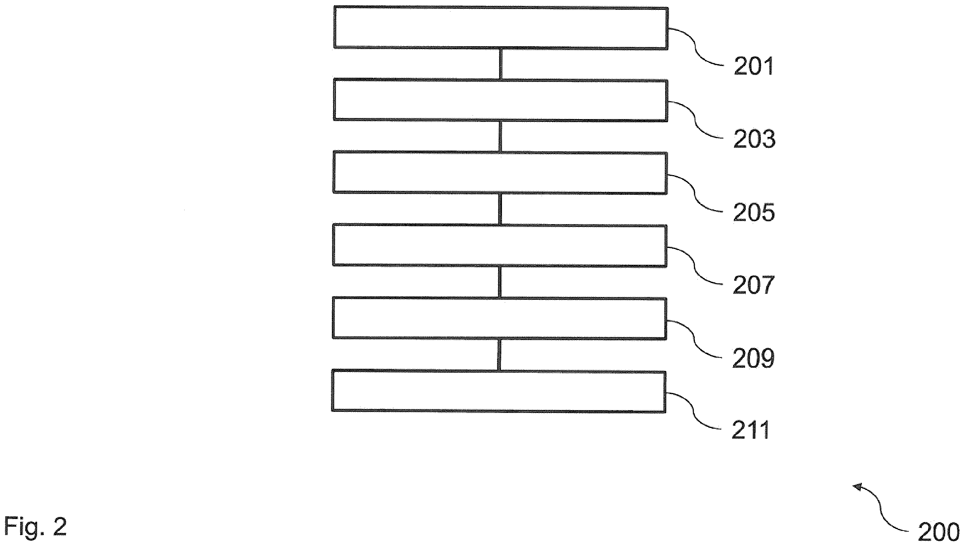

Fig. 2 shows a diagram of a method 200 for determining a signal distortion of an optical signal according to an implementation form. The optical signal comprises a number of frequency channels (m). The signal distortion is introduced by an optical transmission channel having a number of transmission spans (i, k).

The method 200 comprises providing 201 a signal power (P) of the optical signal for each frequency channel (m) and for each transmission span (i, k) to obtain a number of signal powers, providing 203 a chromatic dispersion, CD, value for each frequency channel (m) and for each transmission span (i, k) to obtain a number of chromatic dispersion values, the number of chromatic dispersion values indicating a chromatic dispersion of the optical signal, providing 205 a differential group delay, DGD, value for each frequency channel (m) and for each transmission span (i, k) to obtain a number of differential group delay values, the number of differential group delay values indicating a polarization mode dispersion of the optical signal, determining 207 a number of first distortion measures (κ) upon the basis of the number of chromatic dispersion values and the number of differential group delay values, the number of first distortion measures (κ) indicating a nonlinear signal distortion of the optical signal induced on a single transmission span, determining 209 a number of second distortion measures (ρ) upon the basis of the number of chromatic dispersion values and the number of differential group delay values, the number of second distortion measures (ρ) indicating a correlation between nonlinear signal distortions of the optical signal induced on transmission span (i) and on transmission span (k), and combining 211 the number of signal powers, the number of first distortion measures (κ), and the number of second distortion measures (ρ) to obtain the signal distortion of the optical signal.

The method 200 can be performed by the apparatus 100. Further features of the method 200 directly result from the functionality of the apparatus 100.

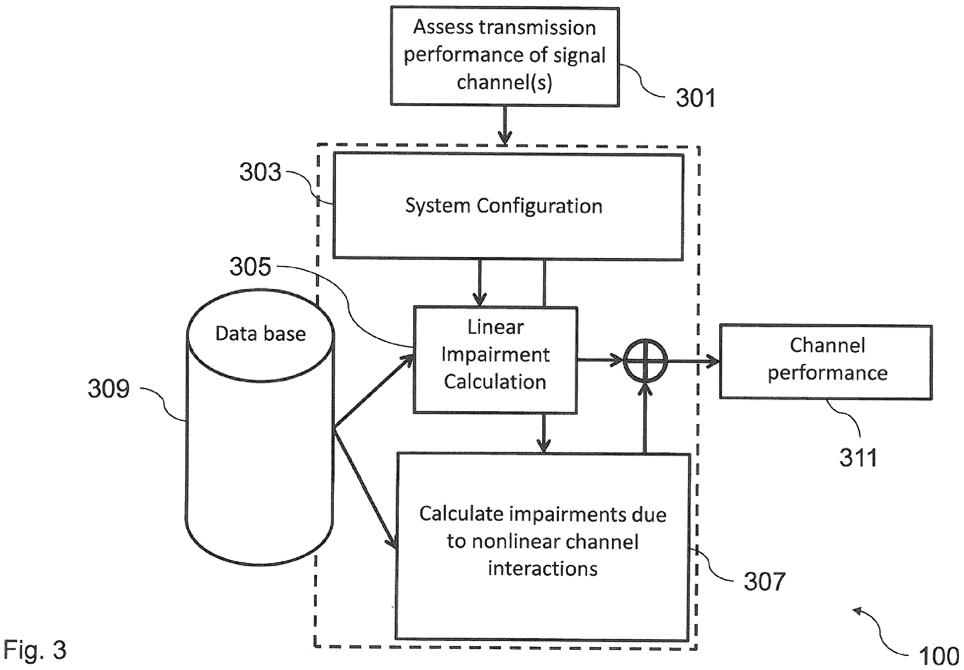

Fig. 3 shows a diagram of an apparatus 100 for determining a signal distortion of an optical signal according to an implementation form.

The apparatus 100 comprises an assessment block 301, a system configuration block 303, a linear impairment calculation block 305, a nonlinear impairment calculation block 307, a database 309, and a channel performance result block 311.

The assessment block 301 is configured to assess a transmission performance of a signal frequency channel or of signal frequency channels. The system configuration block 303 is configured to provide a channel position, a type, a modulation format, a launch power, an amplifier gain, a fiber type, fiber properties such as length, a dispersion coefficient D, or a PMD coefficient.

The linear impairment calculation block 305 is configured to provide noise from optical amplifiers, filter and/or polarization dependent loss penalties, and/or system margins. Models can be available. The nonlinear impairment calculation block 307 is configured to calculate impairments due to nonlinear channel interactions, and is configured to apply a model for determining $SNR^{-1}_{nonlinear\ noise}$ for a frequency channel configuration or a system configuration for a given dispersion compensation scheme which can be determined from fibers in the field and/or dispersion compensation fibers at an amplifier mid-stage access. $CD_i$, $CD_k$, $PMD_i$, $PMD_k$ for PMD correction can either be calculated from tabled fiber values or by feedback of measured data in case optical performance monitors are available.

The database 309 comprises amplifier models, parameters for other linear impairment models, and/or pre-calculated κ and ρ arrays for all frequency channel types, frequency spacing, and/or fiber types to be supported. The values can be determined from specific experimental set-ups. The channel performance result block 311 is configured to provide the channel performance results.

The figure depicts a general workflow to determine a signal distortion or a frequency channel performance, to be used e.g. for network planning, channel upgrade scenarios, and/or online routing requests.

The apparatus 100 can be applied for modeling a PMD impact in coherent-detection dispersion-managed optical communication systems. An analytical or semi-analytical description of non-linear transmission penalties for coherent-detection channels in optical wavelength-division multiplexed communication systems can be used.

Based on the finding that PMD can introduce modifications of a transmission performance especially for dispersion-compensated transmission parts of a communication network, a model to account for this aspect can be derived. In the following, a formalism is introduced to include this fiber property. The formalism can allow for estimating quickly and accurately its impact onto a non-linear fiber transmission penalty.

Flexible optical networking can be based on an accurate performance modeling of each light-path depending on the actual communication network state. Thus, the number and type of active optical frequency channels, traversed filters, as well as fiber and dispersion management types, and individual optical channel power levels can be considered.

Encouraged by advances in modeling of non-dispersion managed (non-DM), coherent detection wavelength division multiplexed (WDM) communication systems, extensions of a nonlinear Gaussian noise model can be introduced taking into account correlations between nonlinear noise generated on different fiber transmission spans. Thereby, dispersion-managed transmission can also be tractable within a nonlinear Gaussian noise framework and the communication system performance can be forecasted including a dependency on the above mentioned configuration parameters.

PMD can have an effect on nonlinear interaction in particular for dispersion managed (DM) transmission spans or sections in a WDM communication system with coherent-detection optical channels. It can be desirable to describe quantitatively an impact of PMD on signal quality within a suitable formalism. An extension of the formalism can be introduced and a reduction of a complexity to consider PMD accurately in transmission over fiber communication links with arbitrary DM, non-DM or mixtures thereof, can be obtained.

The apparatus 100 may be applied for direct detection frequency channels or direct detection systems together with a further nonlinear transmission model. The Gaussian noise model, however, may only be valid for coherent detection systems. For on-off keying (OOK) frequency channels, PMD can have mostly a signal degrading impact due to a lack of compensation of differential group delay after the direct detection frequency channel. Penalties from linear transmission leading to a closure of an electrical eye can, however, prevail merits in the non-linear regime. A quantification of linear signal degradation can be accomplished e.g. by measurement of optical signal depolarization and mapping to an optical signal-to-noise ratio (OSNR) penalty. Both aspects of PMD can be considered in the communication system, i.e. a linear penalty as well as a nonlinear penalty reduction. A PMD-related scaling of a characteristic nonlinear parameter can be introduced. The apparatus 100 can further be applied for coherent detection channels. An effect on a nonlinear tolerance for transmission of coherent-detection WDM frequency channels can be observed. Components with intentional DGD dispersion can be inserted to enable a simultaneous long-haul transmission e.g. of quadrature-amplitude-modulated (QAM) coherent-detection frequency channels and of on-off-keying (OOK) frequency channels. Thus, regarding the above findings, the procedure can effectuate a de-correlation of cross-phase modulation induced distortions from OOK onto QAM frequency channels.

A specific model can be applied. Assuming that nonlinear distortions of an optical signal frequency channel's field can be treated in a low perturbation order, contributions from different transmission spans may only depend on accumulated linear distortions before a respective fiber transmission span. Assuming furthermore that a second order moment is sufficient to describe noise properties, e.g. of Gaussian noise, a variance of a total field distortion can comprise a sum of variances of individual transmission span contributions plus co-variances, and the ratio of equivalent optical nonlinear noise power to signal power ratio $\mathrm{SNR}_{\mathrm{nonlinear\ noise},\ j}^{-1}$ for a frequency channel j can be expressed as follows:

$$\mathrm{SNR}_{\mathrm{nonlinear\ noise},j}^{-1} = \sigma_{\mathrm{nonlinear\ noise},j}^{2} \Big/ P_j = \sum_{i,k=1}^{N_{\mathrm{span}}} \sum_{m=1}^{N_{\mathrm{channel}}} \sqrt{\kappa_{i,m}\,\kappa_{k,m}}\ \rho_m \left( CD_i, CD_k \right) \left( 2 - \delta_{ik} \right) P_{i,m}\ P_{k,m}$$

$$\Delta OSNR_j [dB] = -10 \lg \left( 1 - ROSNR_{\mathrm{btb}}\ \mathrm{SNR}_{\mathrm{nonlinear\ noise},j}^{-1} \right)$$

Here, $N_{\mathrm{span}}$ denotes a number of transmission spans, $P_{i,m}$ denotes a signal power of frequency channel m on span i. $\kappa$ can be defined as below by a variance of nonlinear field distortions for a respective interaction after a compensation of e.g. all linear impairments and a mean nonlinear phase rotation.

$$\kappa_i = \kappa \left( CD_i = \sum_{k=1}^{i-1} D_k L_k \right) = \left\langle \left| \Delta \vec{E}_i \right|^2 \right\rangle = \left\langle \left| \vec{E}_{CD_i}^{\mathrm{nl}} - \vec{E}_0 \right|^2 \right\rangle$$

$$\rho_{ik} = \mathrm{Re} \left\langle \left( \vec{E}_{CD_i}^{\mathrm{nl}} - \vec{E}_0 \right) \left( \vec{E}_{CD_k}^{\mathrm{nl}} - \vec{E}_0 \right)^\dagger \right\rangle \Big/ \sqrt{\kappa_i\,\kappa_k}$$

$\kappa$ and $\rho$ can depend on an accumulated dispersion before launching into transmission span i ($CD_i$), a fiber type, and/or a modulation format. $\rho$ denotes a correlation parameter for nonlinear field distortions. As symbols of neighborfrequency channels may be statistically independent, so may be their induced nonlinear field distortions and correlation may only be considered for signal distortions originating from the same frequency channel.

$\Delta OSNR_j$ denotes an excess OSNR penalty for frequency channel j with respect to a reference $ROSNR_{btb}$ defining a transponder's required OSNR for a certain bit-error-ratio after linear transmission.

Formalisms may, however, fail for dispersion-compensated transmission in presence of non-negligible fiber PMD. A Q-factor penalty reduction of e.g. 1dB may be observed. In order to sustain on a Gaussian noise model for dispersion-managed transmission, it may be desirable to find an extension to consider fiber PMD. An extension of the described formalism can be obtained according to the following considerations.

A PMD effect of fibers and of components can be incorporated into the correlation-based formalism. An introduction of a further parameter related to an accumulated DGD before launching the frequency channel into the next fiber transmission span i, i.e. $DGD_i$, can be based on $\kappa$ depending on 2 and $\rho$ depending on 4 parameters. This approach can yield an accurate model. However, a derivation of array entries and storage in network elements can pose a considerable effort. It turns out that a 4-dimensional array can be decoupled into a product of a previous standard 2-dimensional $\rho$ array with zero DGD and another 2-dimensional array depending only on a minimum accumulated absolute CD value and a difference of an accumulated DGD before the respective fibers. Thereby, the DGD dependency can still be accurately tractable.

$$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle\left|\vec{E}_{CD_i,DGD_i}^{nl} - \vec{E}_0\right|^2\right\rangle$$

$$\rho_m\left(CD_i, DGD_i, CD_k, DGD_k\right) = Re\left\langle\left(\vec{E}_{CD_i,DGD_i}^{nl} - \vec{E}_0\right)\left(\vec{E}_{CD_k,DGD_k}^{nl} - \vec{E}_0\right)^\dagger\right\rangle / \sqrt{\kappa_i \kappa_k}$$

$$\rho_m\left(CD_i, DGD_i, CD_k, DGD_k\right) \approx \rho_m\left(CD_i, CD_k\right) \cdot$$
$$\rho_{m,corr}\left(CD = \min\left(CD_i, CD_k\right), \Delta DGD = \sqrt{\left|DGD_i^2 - DGD_k^2\right|}\right)$$

A reduction of the correlation array size can be desirable. Assuming an exemplary array for 50 GHz-spaced neighbor frequency channel's induced nonlinear distortions which can be able to handle configurations from dispersion-managed to non dispersion-managed transmission over 4000 km SSMF with 20ps maximum DGD, a CD granularity of 80ps/nm and a DGD granularity of 1ps, can e.g. result in a correlation array with 2.56e+8 elements. After an array split as described, the PMD-related matrix may only comprise 1.6e+4 elements.

The formalism can be summarized and/or extended according to the following equations:

$$\sigma_{nonlinear\ noise}^2 = \left\langle\left|\Delta\vec{E}\right|^2\right\rangle = var\left(\sum_{i=1}^{N_{span}} \Delta\vec{E}_i\right) = \sum_{i=1}^{N_{span}} \kappa_i P_i^3 + \sum_{\substack{i,j=1 \\ j\neq i}}^{N_{span}} \sqrt{\kappa_i \kappa_j}\ \rho_{ij}\left(P_i P_j\right)^{3/2}$$

$$\kappa_i = \kappa\left(CD_i = \sum_{k=1}^{i-1} D_k L_k\right) = \left\langle\left|\Delta\vec{E}_i\right|^2\right\rangle = \left\langle\left|\vec{E}_{CD_i}^{nl} - \vec{E}_0\right|^2\right\rangle$$

$$\rho_{ik} = Re\left\langle\left(\vec{E}_{CD_i}^{nl} - \vec{E}_0\right)\left(\vec{E}_{CD_k}^{nl} - \vec{E}_0\right)^\dagger\right\rangle / \sqrt{\kappa_i \kappa_k}$$

$$SNR^{-1}_{nonlinear\,noise,j} = \sigma^2_{nonlinear\,noise,j} \Big/ P_j = \sum_{i,k=1}^{N_{span}} \sum_{m=1}^{N_{channel}} \sqrt{\kappa_{i,m}\kappa_{k,m}}\, \rho_m\left(CD_i, CD_k\right)\left(2 - \delta_{ik}\right) P_{i,m} P_{k,m}$$

$$\Delta OSNR_j\,[dB] = -10\lg\left(1 - ROSNR_{btb}\,SNR^{-1}_{nonlinear\,noise,j}\right)$$

The nonlinear distortion $\Delta E_i$ of the optical signal field can depend on the frequency spacing between a signal frequency channel and an interferer (e.g. frequency spacing = 0 for self-phase modulation / nonlinear self-interference and frequency spacing $\neq$ 0 referring to cross-channel interactions), on a modulation format, on a baud-rate of the optical signal and the interferer, on a fiber type, in particular a nonlinear coefficient or a fiber dispersion coefficient D, and/or on an accumulated dispersion CD of a frequency channel and an interferer before entering the fiber transmission span or section where nonlinear interaction takes place.

$\Delta E_i$ can be determined as a difference of a received optical signal field after compensation for linear distortions, i.e. CD can be restored to 0ps/nm, an average or mean nonlinear phase rotation of a constellation, and/or an undistorted signal $E_0$.

$\kappa_{i,m}$ denotes an efficiency of nonlinear noise generation from frequency channel m onto signal frequency channel j. $\rho_m(CD_i, CD_k)$ denotes a correlation of nonlinear distortions induced by frequency channel m on transmission spans i and k. In presence of further linear and/or statistical distortions such as PMD, the formulae can read like:

$$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle \left| \vec{E}^{nl}_{CD_i,DGD_i} - \vec{E}_0 \right|^2 \right\rangle$$

$$\rho_m\left(CD_i, DGD_i, CD_k, DGD_k\right) = Re\left\langle \left(\vec{E}^{nl}_{CD_i,DGD_i} - \vec{E}_0\right)\left(\vec{E}^{nl}_{CD_k,DGD_k} - \vec{E}_0\right)^\dagger \right\rangle \Big/ \sqrt{\kappa_i \kappa_k}$$

$$\rho_m\left(CD_i, DGD_i, CD_k, DGD_k\right) \approx \rho_m\left(CD_i, CD_k\right) \cdot$$
$$\rho_{m,corr}\left(CD = \min\left(CD_i, CD_k\right), \Delta DGD = \sqrt{\left|DGD_i^2 - DGD_k^2\right|}\right)$$

$\Delta E_i$ can be determined as described including an additional compensation of polarization distortion due to PMD.

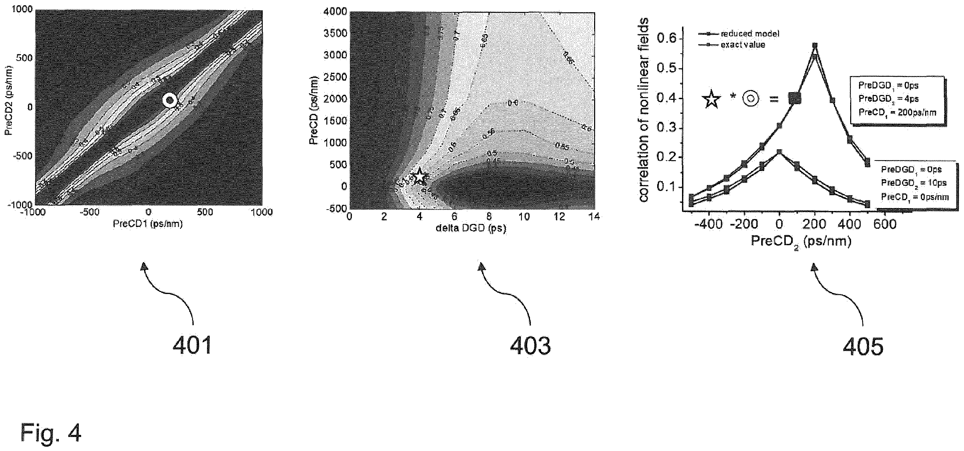

Fig. 4 shows diagrams 401, 403, 405 for illustrating a performance of determining a signal distortion of an optical signal according to an implementation form.

The diagram 401 depicts a correlation of nonlinearity-induced field distortions from an exemplary 128G polarization division multiplexed (PDM) non-return to zero (NRZ) differential quadrature phase shift keying (DQPSK) frequency channel depending on an accumulated chromatic dispersion before a respective fiber transmission span. It shows largest correlation values for identical accumulated CD values. The CD values can relate to PreCD in the figure. The diagram 403 depicts a PMD-induced reduction of correlation depending on an accumulated CD value and a difference of accumulated differential group delay values. The diagram 405 depicts a comparison of exact correlation values for various values of accumulated CD values and PMD in form of curves and corresponding values derived from a combination of the two 2-dimensional arrays.

In order to illustrate an array size reduction, exact correlations of nonlinear distortions from nonlinear fiber propagation can be compared with model results combining a standard PMD-independent correlation matrix and a PMD correlation correction matrix as described by the formula. Results for nonlinear signal distortions originating from an exemplary 50GHz-spaced neighbor frequency channel after propagation on a 80km SSMF are depicted. Furthermore, 128 Gbit/s PDM NRZ DQPSK channels are considered.

The diagram 405 comprises cuts of a 4-dimensional array. Accumulated dispersion (PreCD) and DGD values (PreDGD) are depicted in the inset. The frequency channels' accumulated dispersion CD (PreCD$_2$ in the figure) is varied before nonlinear interaction in a second fiber transmission span.

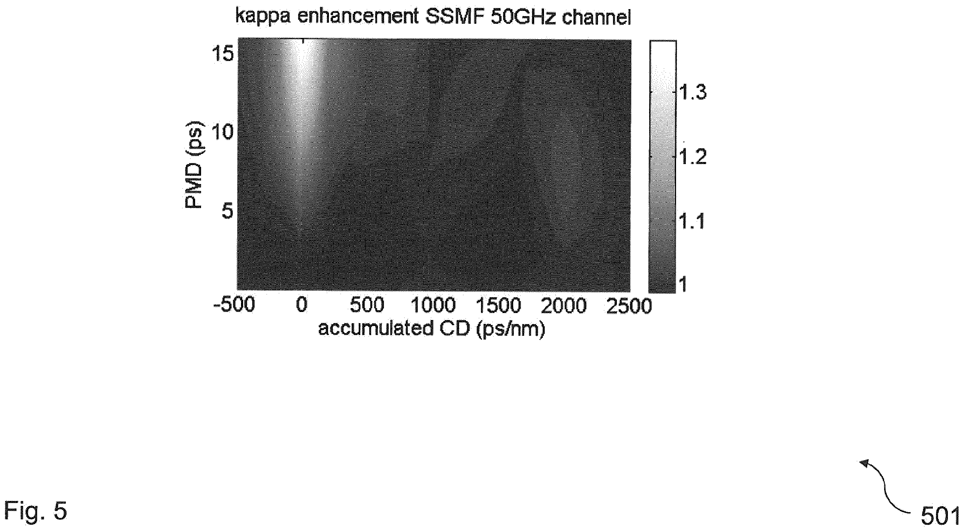

Fig. 5 shows a contour diagram 501 for illustrating a performance of determining a signal distortion of an optical signal according to an implementation form.

The contour diagram 501 depicts an enlargement of $\kappa$ with regard to a 0ps DGD case for an exemplary 50GHz spaced neighbor frequency channel on a large effective area fiber (LEAF). From high DGD values on, there can occur also an increase of $\kappa$, i.e. an increase of the nonlinear noise power generation efficiency, due to an enlarged peak-to-average power ratio (PAPR) before launching into a transmission fiber.

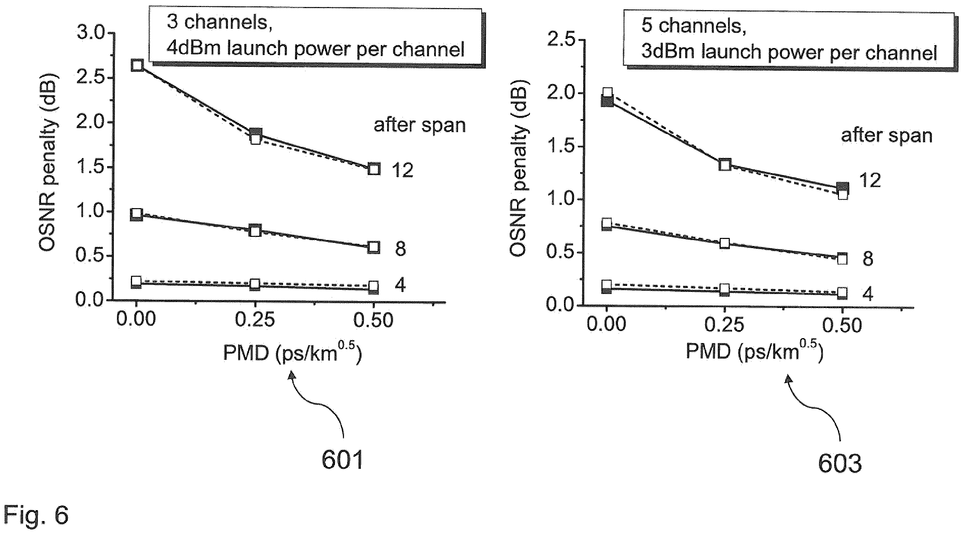

Fig. 6 shows diagrams 601, 603 for illustrating a performance of determining a signal distortion of an optical signal according to an implementation form.

The diagrams 601, 603 depict a comparison of exemplary simulated and modeled OSNR penalties for standard single mode fiber (SSMF) transmission configurations. The diagram 601, 603 illustrate the model's general applicability to arbitrary dispersion maps and frequency channel counts. A dispersion compensating fiber with e.g. -340ps/nm dispersion can be configured followed by e.g. 80 km transmission spans of SSMF with each dispersion being under-compensated to e.g. 94% in subsequent amplifiers. Each fourth transmission span can e.g. be dispersion over-compensated by 18%. The simulation and model results for different frequency channel counts, launch power and transmission fiber counts are depicted.

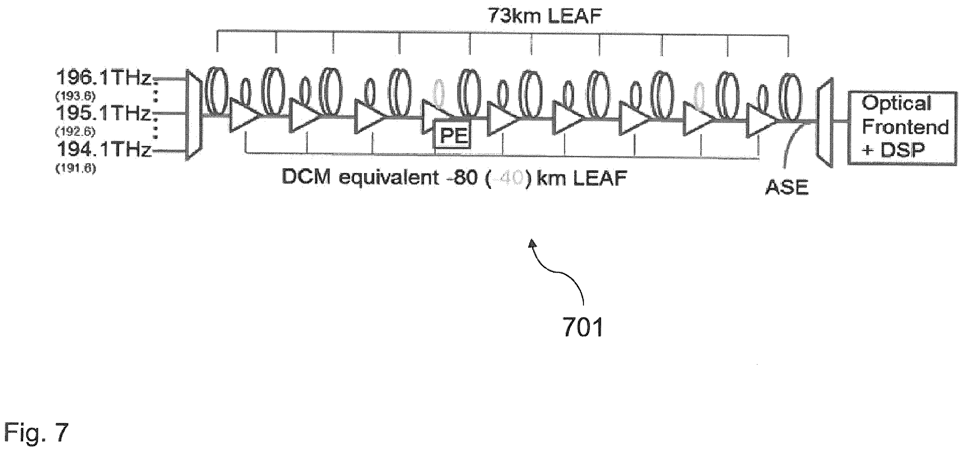

Fig. 7 shows a diagram 701 of an optical transmission channel having a number of transmission spans according to an implementation form.

An optical signal comprising a number of frequency channels, e.g. in first configuration from 196.1THz to 194.1THz with 50GHz channel spacing, and in a second configuration from 193.6THz to 191.6THz, is transmitted over the optical transmission channel. The optical transmission channel comprises of 73km LEAF spans and dispersion compensation modules of size and position as indicated in the figure. The optical signal is received by an optical frontend comprising a DSP and an ASE.

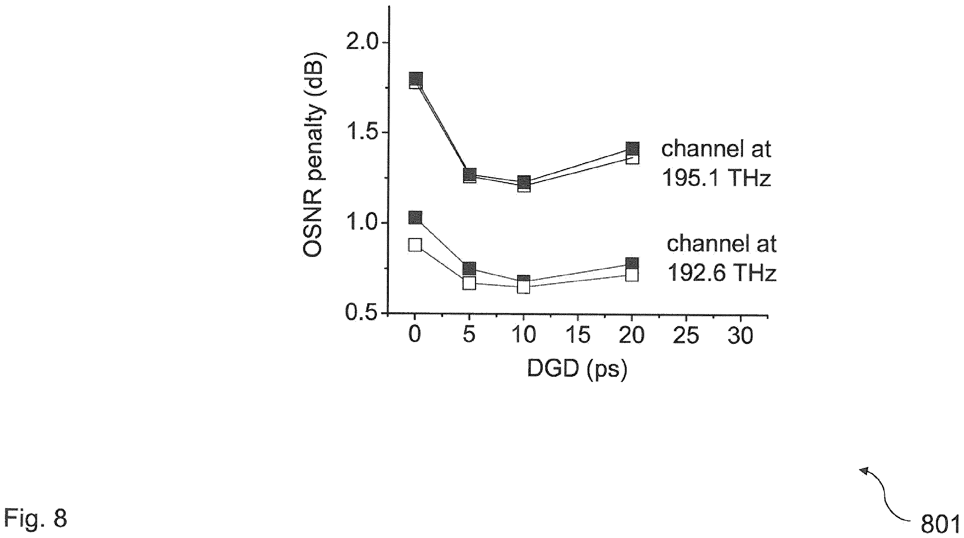

Fig. 8 shows a diagram 801 for illustrating a performance of determining a signal distortion of an optical signal according to an implementation form.

The diagram 801 depicts experimental results, model results and simulation results for an exemplary transmission of 21 frequency channels with each being modulated with 128G NRZ PDM DQPSK over 10 transmission spans of a dispersion compensated LEAF of the above configuration. A PMD emulator (PE) is placed after a 4th transmission span and a mean DGD value is varied from 0 to 20 ps. A fiber launch signal power of e.g. -1dBm/frequency channel can be chosen. An OSNR penalty can be derived by amplified spontaneous emission (ASE) noise loading at the receiver (RX) end. Filled symbols relate to measurement results. Open symbols relate to model results. Black/filled symbols relate to simulation results for a related configuration. The diagram 801 depicts measurement and corresponding model results for the 41 frequency channel transmission over a dispersion managed LEAF communication link with the dispersion scheme described above.

A reduction of the nonlinear penalty can be observed for DGD values e.g. up to 10 ps. An increased PAPR can prevail the reduced correlation. This latter effect can occur mainly for concentrated DGD elements, but can be included in the model by a DGD dependence of $\kappa$. An agreement of model and measurement results can be observed.

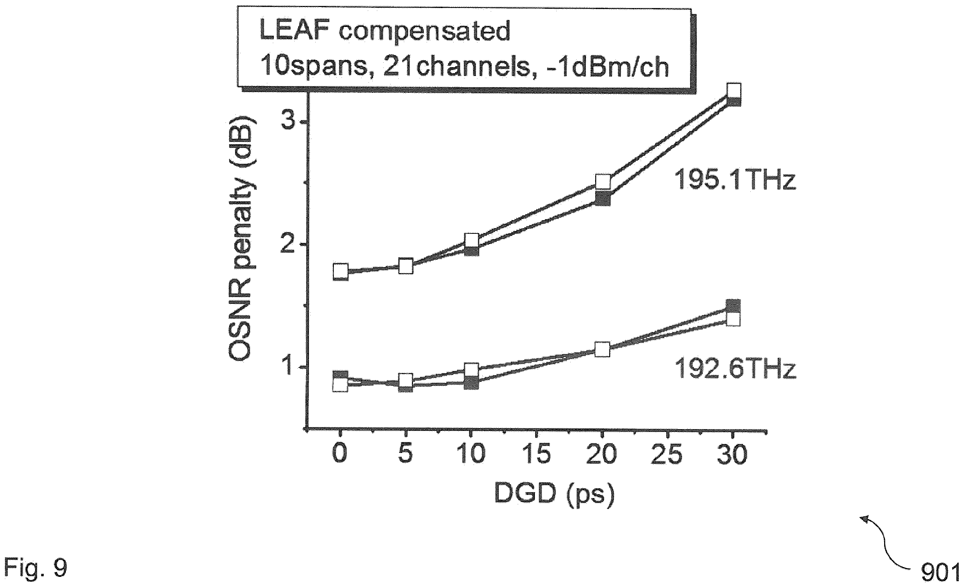

Fig. 9 shows a diagram 901 for illustrating a performance of determining a signal distortion of an optical signal according to an implementation form.

The diagram 901 depicts experimental results and model results for an identical set-up as in the previous figure but with a PMDE inserted after the transmitter (TX). Filled symbols relate to measurement results. Open symbols relate to model results. The diagram 901 shows an OSNR penalty but with application of a PMD emulator after the multiplexer (MUX). In contrast to the previous case, the penalty can monotonously increase with DGD value and thus confirming that there may be no reduction of correlation but only an increase of non-linear noise power generation efficiency.

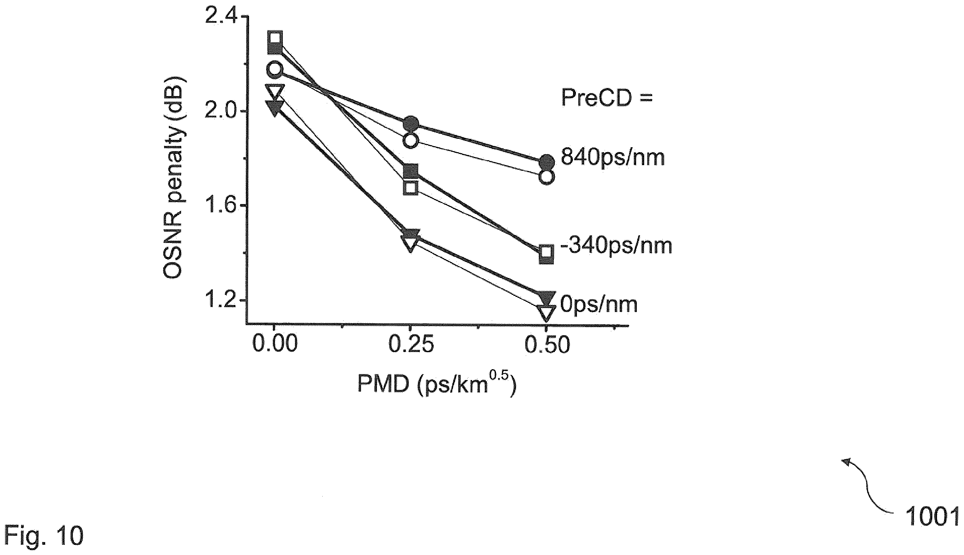

Fig. 10 shows a diagram 1001 for illustrating a performance of determining a signal distortion of an optical signal according to an implementation form.

The diagram 1001 depicts a comparison of simulated and modeled OSNR penalties for exemplary configurations. The diagram 1001 depicts the simulated OSNR penalty as open symbols and the modeled OSNR penalty as full symbols. The OSNR penalty is caused by nonlinear frequency channel interactions depending on a fiber PMD coefficient for the configurations.

In order to corroborate the accuracy of a simplified algorithm, simulations for a transmission of three 128G PDM NRZ DQPSK frequency channels with e.g. 3dBm launch signal power can be performed with each e.g. on 12x80km of a standard single mode fiber with full dispersion compensation after each transmission span and e.g. -340 / 0 and 840 ps/nm CD pre-compensation before the first fiber transmission span and coherent detection and a target bit-error-ratio of e.g. 2e-2. In a WDM case, a cross-phase and cross-polarization modulation from nearest neighbor frequency channels can determine the largest part of nonlinear noise power. So the modification of these terms can essentially reflect the impact of PMD in the nonlinear regime. For high model accuracy, in principle, all PMD dependencies either for $\kappa$ or $\rho$ may be included.

The invention can provide the following benefits. The approach can allow modeing an impact of PMD onto a transmission performance of coherent-detection WDM frequency channels. As shown, the effect may not be marginal but substantial for DM communication links. The dissociation of a 4-dimensional correlation array (CD1, PMD1; CD2, PMD2) into a product of a standard 2-dimensional correlation matrix (CD1; CD2) and a 2-dimensional correction matrix (CD, ΔDGD) can yield accurate results and can reduce memory requirements and computation time, e.g. to generate array entries. Thus, the approach can be applied in on- and offline network planning and path computation with minor additional computation complexity.

The approach may also be applied for other fiber types, for combinations of different fiber types and for different modulation formats and symbol rates. The optical signal may be coherently detected. The approach allows considering an impact of PMD quantitatively in coherent-detection DM or partially DM WDM communication systems.

The invention can enable to quickly estimate a signal quality of coherent-detection optical signal frequency channels for non-linear transmission over DM fiber links, non-DM fiber links or mixtures thereof in presence of PMD.

A modeling of a transmission performance e.g. of 128G-PDM-QPSK frequency channels over arbitrary dispersion maps for different fiber types in presence of PMD can be performed. A correlation approach can be applied allowing for nonlinear penalty prediction including PMD dependency for arbitrary dispersion managed WDM communication systems with coherent detection. Model results can be confirmed by corresponding simulations.

Flexible optical networking can be based on an accurate performance modeling of each light-path depending on the actual communication network state. Thus, it can be desirable to consider a number and a type of active frequency channels, of traversed filters, fiber and dispersion management types, and/or individual channel signal power levels.

A modeling of non-DM coherent detection WDM systems, a Gaussian noise (GN) description, and/or application-oriented modifications can be applied which allow to enhance an accuracy of models for mixed fiber non-DM systems. In order to approach the objective of a general applicability, it can be desirable to get rid of dispersion management constraints.

Formalisms can be augmented in particular with regard to correlation properties of nonlinear noise extending the scope of a specific model to WDM communication systems with arbitrary dispersion management. PMD induced modifications of a nonlinear penalty can be considered which can be relevant for DM communication systems.

A semi-analytical model can be applied. Assuming that nonlinear distortions of the optical signal frequency channel's field can be treated in a low perturbation order, contributions from different transmission spans may only depend on accumulated linear distortions before the respective fiber transmission span.

Considering that a second order moment is sufficient to describe noise properties, a variance of a total field distortion can comprise a sum of variances of individual transmission span contributions plus their co-variances, and a ratio of an equivalent nonlinear noise power to signal power $\text{SNR}_{\text{nonlinear noise,j}}^{-1}$ for a frequency channel j can be expressed as follows:

$$\kappa_i = \kappa \left( CD_i = \sum_{k=1}^{i-1} D_k L_k \right) = \left\langle \left| \Delta \vec{E}_i \right|^2 \right\rangle = \left\langle \left| \vec{E}_{CD_i}^{\,nl} - \vec{E}_0 \right|^2 \right\rangle$$

$$\rho_{ik} = \text{Re} \left\langle \left( \vec{E}_{CD_i}^{\,nl} - \vec{E}_0 \right) \left( \vec{E}_{CD_k}^{\,nl} - \vec{E}_0 \right)^{\dagger} \right\rangle \Big/ \sqrt{\kappa_i \, \kappa_k}$$

$$\text{SNR}_{\text{nonlinearnoise,j}}^{-1} = \sigma_{\text{nonlinear noise,j}}^2 \Big/ P_j = \sum_{i,k=1}^{N_{\text{span}}} \sum_{m=1}^{N_{\text{channel}}} \sqrt{\kappa_{i,m} \kappa_{k,m}} \, \rho_m \left( CD_i, CD_k \right) \left( 2 - \delta_{ik} \right) P_{i,m} \, P_{k,m}$$

$N_{\text{span}}$ denotes the number of transmission spans, $P_{i,m}$ denotes the signal power of frequency channel m on transmission span i. $\kappa$ is defined as above by a variance of nonlinear field distortions for the respective interaction after compensation of all linear impairments and a mean nonlinear phase rotation. $\kappa$ can depend on an accumulated dispersion ($CD_i$) before launching in transmission span i, a DGD, a fiber type, and/or a modulation format. $\rho$ denotes a correlation parameter for nonlinear field distortions. As symbols of neighbor frequency channels can be statistically independent, so can be their induced nonlinear field distortions and correlation may only be considered for distortions originating from the same frequency channel.

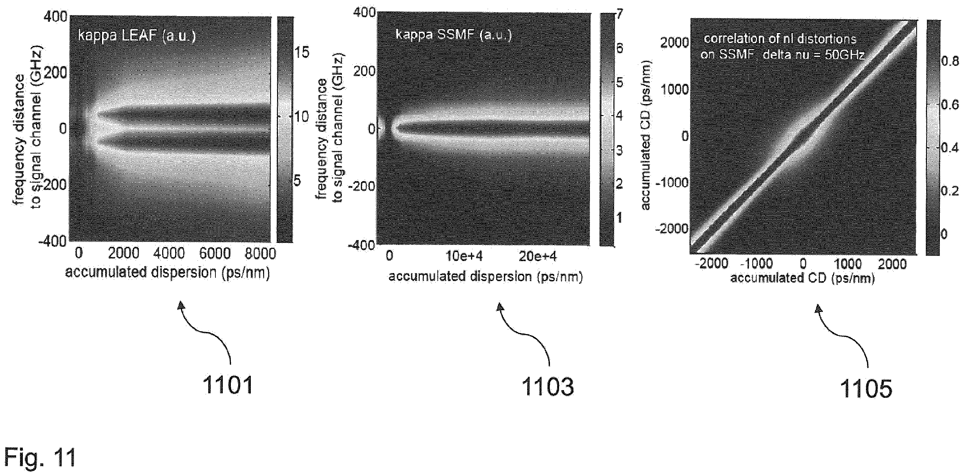

Fig. 11 shows contour diagrams 1101, 1103, 1105 for illustrating a performance of determining a signal distortion of an optical signal according to an implementation form.

The diagram 1101 depicts $\kappa$ for a LEAF. The diagram 1103 depicts $\kappa$ for an SSMF for different frequency distances, signal frequency channels and various accumulated dispersion values. The diagram 1105 depicts a correlation of nonlinear distortions induced by an exemplary 50GHz spaced 128G PDM QPSK channel on an SSMF and is depicted as a function of an accumulated dispersion.

In this example, $\kappa$ matrices or vectors and $\rho$ matrices for 128G polarization multiplexed non-return-to-zero quadrature phase shift keying (PDM NRZ-QPSK) frequency channels, each comprising e.g. $2^{15}$ symbols on an e.g. 80km long standard single mode fiber (SSMF) and/or a large effective area fiber (LEAF), are generated.

In case of mixed fibers in a communication link, also the correlation between nonlinear field distortions for all pairs of fiber types can be derived. Exemplary fiber parameters used for simulation and modeling are listed in the following:

| | SSMF | LEAF |
|---|---|---|
| Nonlinear coefficient $\gamma$ (W$^{-1}$ km$^{-1}$) | 1.4 | 1.3 |
| Dispersion coefficient (ps nm$^{-1}$ km$^{-1}$) | 16.8 | 4.05 |
| Dispersion slope (ps nm$^{-2}$ km$^{-1}$) | 0.058 | 0.085 |

After transmission, linear channel impairments can be compensated using digital signal processing (DSP) e.g. by blind estimation algorithms, and specific approaches can be applied to reduce an additional penalty for soft-decision differential decoding.

The diagrams 1101, 1103, and 1105 depict $\kappa$ values on LEAF and SSMF as filled contour plots for frequency channels on an exemplary 50GHz frequency channel grid. On SSMF, self-phase modulation (SPM) can have a largest coefficient (@$\Delta v = 0$) whereas on a LEAF the 50GHz spaced neighbor frequency channels can have a largest contribution to nonlinear signal distortion.

In diagram 1105 the correlation of nonlinear distortions induced by a 50GHz spaced neighbor frequency channel with an accumulated CD1 and CD2 is depicted. The correlation can equal 1 for the same CD as in maps with full compensation of dispersion, and can e.g. fall below 10% typically for a CD difference corresponding to e.g. 50km of fiber. The PMD value is set to zero for the data in the figure.

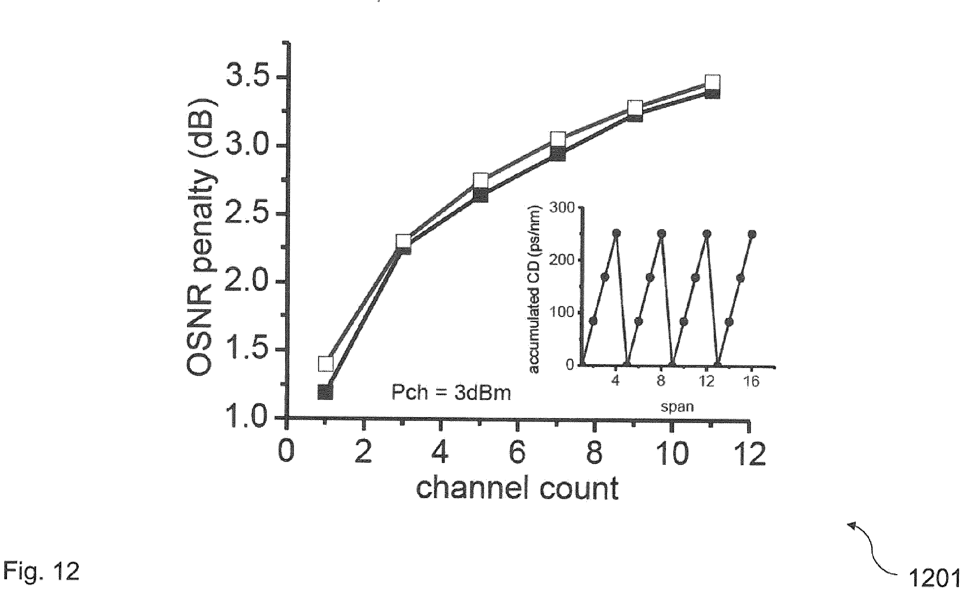

Fig. 12 shows a diagram 1201 for illustrating a performance of determining a signal distortion of an optical signal according to an implementation form.

The diagram 1201 depicts OSNR penalties for various frequency channel counts after a DM transmission over a 16 transmission span SSMF. Full symbols relate to simulation results. Open symbols relate to correlation model results. An approach to periodically return a dispersion map on an SSMF as shown in the inset of the diagram 1201 can be applied. The OSNR penalties can e.g. be calculated for a frequency channel at 194.1THz by noise loading at a receiver for a soft decision forward error correction (SD-FEC) reference bit-error-rate (BER) of e.g. 2e-2 corresponding to a desired back-to-back OSNR of e.g. about 11.9dB. The simulation results were averaged e.g. for 10 runs using random seeds. Except for the prediction of a single frequency channel penalty, where nonlinear noise around constellation points can resemble more conditionally bivariate Gaussian distributions, the approach can agree the better with simulation results the higher the channel count is chosen.

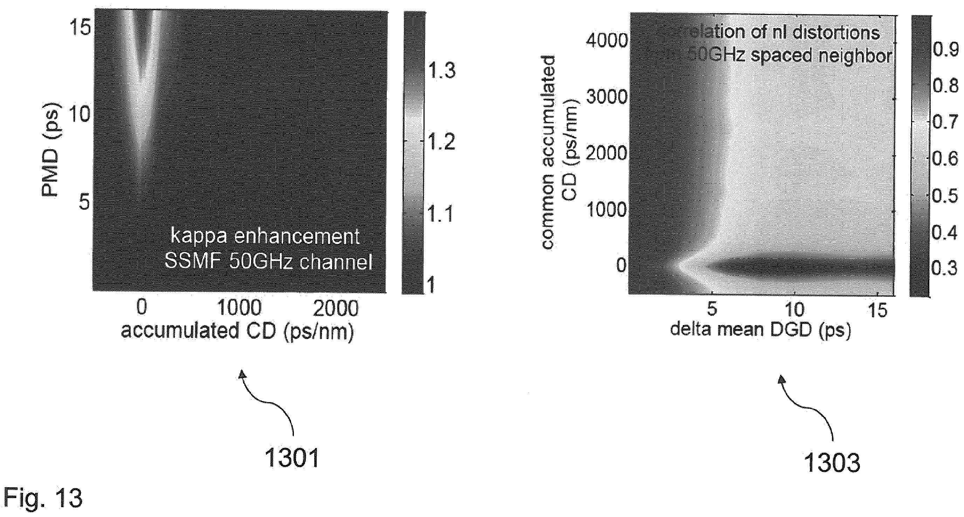

Fig. 13 shows contour diagrams 1301, 1303 for illustrating a performance of determining a signal distortion of an optical signal according to an implementation form.

An enhancement of $\kappa$ for different DGD values with regard to DGD = 0 is depicted in diagram 1301 and a PMD-induced change of correlation of nonlinear distortions on an SSMF is depicted in diagram 1303. In order to gain a qualitative and quantitative insight, $\kappa$ and $\rho$ tables for various values of DGD can be generated. As $\rho$ can depend on 4 parameters, e.g. two CD and PMD values each, a cut at CD1 = CD2 and DGD2-DGD1 can be considered for an exemplary 50GHz spaced neighbor frequency channel. For CD1 $\neq$ CD2, the correlation may decline compared to Fig. 11. For a small accumulated CD and large DGD values, $\kappa$ can be enhanced by an increased peak-to-average-power-ratio (PAPR). Simultaneously, a correlation of nonlinear field distortions can be reduced for small accumulated CD values and to a smaller extent for larger accumulated CD values.

The PMD-induced modifications of $\kappa$ and $\rho$ can be used to introduce PMD in the model to allow for a general applicability in DM and non-DM systems. By superimposing the corrections on the corresponding values of $\kappa$ and $\rho$ derived for zero PMD, the transmission penalty can be assessed accurately, as seen in the dashed lines in Fig. 13, for various dispersion maps and fiber PMD values.

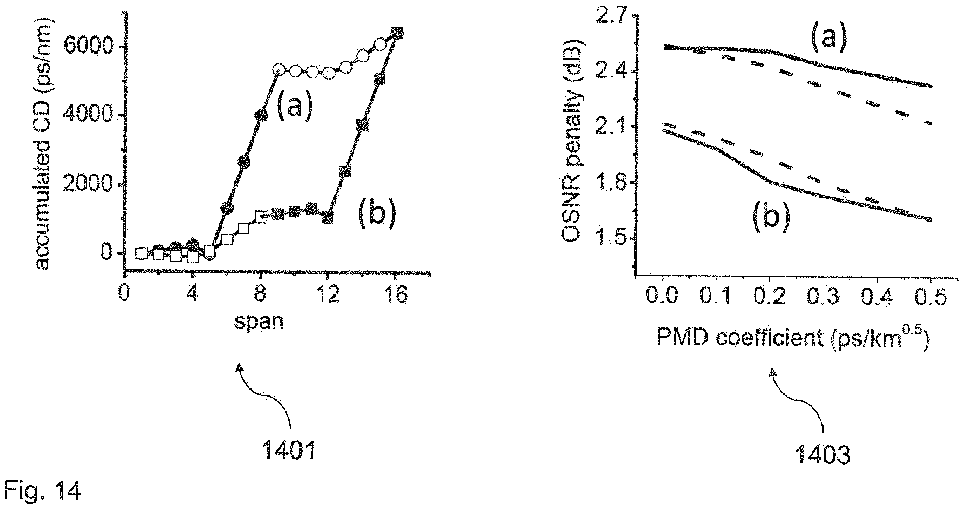

Fig. 14 shows diagrams 1401, 1403 for illustrating a performance of determining a signal distortion of an optical signal according to an implementation form.

In diagram 1401, a dispersion map for mixed fiber mixed dispersion management transmission is depicted. Open symbols relate to a LEAF. Full symbols relate to an SSMF. In diagram 1403, an OSNR penalty for corresponding maps for e.g. 3 frequency channels at 2dBm and 7 frequency channels at 3dBm depending on a fiber PMD coefficient is depicted. Dashed lines relate to model results. Solid lines relate to simulation results.

DM and non-DM transmission spans or sections for LEAF and SSMF can be combined. Three frequency channel transmissions at e.g. 2dBm/channel for an SSMF followed by a LEAF can exhibit a larger penalty (a) than e.g.

a 7 frequency channel transmission at 3dBm with a reversed fiber type order (b). An application of PMD-dependent $\kappa$ and $\rho$ changes can reproduce the simulated results with high accuracy.

The scope of the correlation-based approach for non-linear penalty assessment in coherent detection systems can be extended in order to cover transmission with arbitrary dispersion management. By considering PMD-induced correlation changes, the impact of this fiber property on signal quality can be taken into account quantitatively in the nonlinear regime. Model results can be verified by simulation results for the corresponding configurations.

Although the present invention has been described with reference to specific features and embodiments thereof, it is evident that various modifications and combinations can be made thereto without departing from the spirit and scope of the invention. The specification and drawings are, accordingly, to be regarded simply as an illustration of the invention as defined by the appended claims, and are contemplated to cover any and all modifications, variations, combinations or equivalents that fall within the scope of the present invention.

**Claims**

1. An apparatus (100) for determining a signal distortion of an optical signal, the optical signal comprising a number of frequency channels (m), the signal distortion being introduced by an optical transmission channel having a number of transmission spans (i, k), the apparatus (100) comprising:

   a provider (101) being configured to provide a signal power (P) of the optical signal for each frequency channel (m) and for each transmission span (i, k) to obtain a number of signal powers, to provide a chromatic dispersion, CD, value for each frequency channel (m) and for each transmission span (i, k) to obtain a number of CD values, each CD value indicating a CD of the optical signal, and to provide a differential group delay, DGD, value for each frequency channel (m) and for each transmission span (i, k) to obtain a number of DGD values, each DGD value indicating a polarization mode dispersion of the optical signal;
   a determiner (103) being configured to determine a number of first distortion measures ($\kappa$) upon the basis of the CD values and the DGD values, each first distortion measure ($\kappa$) indicating a nonlinear signal distortion of the optical signal induced on a single transmission span (i, k), and to determine a number of second distortion measures ($\rho$) upon the basis of the CD values and the DGD values, each second distortion measure ($\rho$) indicating a correlation between nonlinear signal distortions of the optical signal induced on transmission span (i) and on transmission span (k); and
   a combiner (105) being configured to combine the signal powers, the first distortion measures ($\kappa$), and the second distortion measures ($\rho$) to obtain the signal distortion of the optical signal;
   wherein the determiner (103) is configured to determine the first distortion measures ($\kappa$) or the second distortion measures ($\rho$) according to the following equations:

   $$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle \left|\vec{E}_{CD_i,DGD_i}^{nl} - \vec{E}_0\right|^2 \right\rangle$$

   $$\rho_m\left(CD_i, DGD_i, CD_k, DGD_k\right) = \mathrm{Re}\left\langle \left(\vec{E}_{CD_i,DGD_i}^{nl} - \vec{E}_0\right)\left(\vec{E}_{CD_k,DGD_k}^{nl} - \vec{E}_0\right)^\dagger \right\rangle \Big/ \sqrt{\kappa_i \kappa_k}$$

   wherein $\kappa$ denotes a first distortion measure, $\rho$ denotes a second distortion measure, CD denotes a chromatic dispersion value, DGD denotes a differential group delay value, D denotes a chromatic dispersion coefficient, PMD denotes a polarization mode dispersion coefficient, L denotes a length of a transmission span, i denotes a transmission span index, k denotes a further transmission span index, m denotes a frequency channel index, $\vec{E}_{CD_i,DGD_i}^{nl}$ denotes a distorted electrical field vector, $\vec{E}_{CD_k,DGD_k}^{nl}$ denotes a further distorted electrical field vector, and $\vec{E}_0$ denotes an undistorted electrical field vector.

2. The apparatus (100) of claim 1, wherein the apparatus (100) comprises a database (309) for providing the signal powers, the CD values, or the DGD values, and wherein the provider (101) is configured to retrieve the signal powers, the CD values, or the DGD values from the database (309).

3. The apparatus (100) of claims 1 or 2, wherein the determiner (103) is configured to determine a distorted electrical field vector of the optical signal for each frequency channel (m) and for each transmission span (i, k) to obtain a number of distorted electrical field vectors, wherein the distorted electrical field vectors is associated to the CD values and the DGD values, and wherein the determiner (103) is configured to determine the first distortion measures ($\kappa$) or the second distortion measures ($\rho$) upon the basis of the distorted electrical field vectors.

4. The apparatus (100) of claim 3, wherein the determiner (103) is configured to determine a linear signal distortion of the optical signal for each frequency channel (m) and for each transmission span (i, k) to obtain a number of linear signal distortions, and wherein the determiner (103) is configured to compensate the distorted electrical field vectors by the linear signal distortions.

5. The apparatus (100) of claims 3 or 4, wherein the determiner (103) is configured to determine an average nonlinear phase rotation of the optical signal for each frequency channel (m) and for each transmission span (i, k) to obtain a number of nonlinear phase rotations, and wherein the determiner (103) is configured to compensate the number of distorted electrical field vectors by the number of nonlinear phase rotations.

6. The apparatus (100) of claims 3 to 5, wherein the determiner (103) is configured to determine an undistorted electrical field vector of the optical signal for each frequency channel (m) and for each transmission span (i, k) to obtain a number of undistorted electrical field vectors, and wherein the determiner (103) is configured to compensate the distorted electrical field vectors by the undistorted electrical field vectors.

7. The apparatus (100) of any of claims 1 to 6, wherein the determiner (103) is configured to arrange the first distortion measures ($\kappa$) to form a two-dimensional array of first distortion measures ($\kappa$), and wherein the combiner (105) is configured to combine the signal powers, the first distortion measures ($\kappa$), and the second distortion measures ($\rho$) upon the basis of the two-dimensional array of first distortion measures ($\kappa$).

8. The apparatus (100) of any of claims 1 to 7, wherein the determiner (103) is configured to arrange the second distortion measures ($\rho$) to form a four-dimensional array of second distortion measures ($\rho$), and wherein the combiner (105) is configured to combine the signal powers, the first distortion measures ($\kappa$), and the second distortion measures ($\rho$) upon the basis of the four-dimensional array of second distortion measures ($\rho$).

9. The apparatus (100) of claim 8, wherein the determiner (103) is configured to decompose the four-dimensional array of second distortion measures ($\rho$) into a first decomposed two-dimensional array of second distortion measures ($\rho$) and a second decomposed two-dimensional array of second distortion measures ($\rho$), and wherein the combiner (105) is configured to combine the signal powers, the first distortion measures ($\kappa$), and the second distortion measures ($\rho$) upon the basis of the first decomposed two-dimensional array of second distortion measures ($\rho$) and the second decomposed two-dimensional array of second distortion measures ($\rho$).

10. The apparatus (100) of claim 9, wherein the determiner (103) is configured to decompose the four-dimensional array of second distortion measures ($\rho$) into the first decomposed two-dimensional array of second distortion measures ($\rho$) and the second decomposed two-dimensional array of second distortion measures ($\rho$) according to the following equation:

$$\rho_{\mathrm{m}}\left(\mathrm{CD}_{\mathrm{i}},\mathrm{DGD}_{\mathrm{i}},\mathrm{CD}_{\mathrm{k}},\mathrm{DGD}_{\mathrm{k}}\right) \approx \rho_{\mathrm{m}}\left(\mathrm{CD}_{\mathrm{i}},\mathrm{CD}_{\mathrm{k}}\right)\cdot$$
$$\rho_{\mathrm{m,corr}}\left(\mathrm{CD}=\min\left(\mathrm{CD}_{\mathrm{i}},\mathrm{CD}_{\mathrm{k}}\right),\Delta\mathrm{DGD}=\sqrt{\left|\mathrm{DGD}_{\mathrm{i}}^{2}-\mathrm{DGD}_{\mathrm{k}}^{2}\right|}\right)$$

wherein $\rho$ denotes a second distortion measure, CD denotes a chromatic dispersion value, DGD denotes a differential group delay value, i denotes a transmission span index, k denotes a further transmission span index, m denotes a frequency channel index, $\rho_{\mathrm{m}}(\mathrm{CD}_{\mathrm{i}},\mathrm{DGD}_{\mathrm{i}},\mathrm{CD}_{\mathrm{k}},\mathrm{DGD}_{\mathrm{k}})$ denotes the four-dimensional array of second distortion measures, $\rho_{\mathrm{m}}(\mathrm{CD}_{\mathrm{i}},\mathrm{CD}_{\mathrm{k}})$ denotes the first decomposed two-dimensional array of second distortion measures, and

$$\rho_{\mathrm{m,corr}}\left(\mathrm{CD}=\min\left(\mathrm{CD}_{\mathrm{i}},\mathrm{CD}_{\mathrm{k}}\right),\Delta\mathrm{DGD}=\sqrt{\left|\mathrm{DGD}_{\mathrm{i}}^{2}-\mathrm{DGD}_{\mathrm{k}}^{2}\right|}\right)$$

**EP 3 146 653 B1**

denotes the second decomposed two-dimensional array of second distortion measures.

**11.** The apparatus (100) of any of claims 1 to 11, wherein the combiner (105) is configured to combine the signal powers, the first distortion measures ($\kappa$), and the second distortion measures ($\rho$) according to the following equation:

$$\mathrm{SNR}^{-1}_{\mathrm{nonlinear\,noise,j}} = \sigma^2_{\mathrm{nonlinear\,noise,j}} \Big/ P_j = \sum_{i,k=1}^{N_{span}} \sum_{m=1}^{N_{channel}} \sqrt{\kappa_m(\mathrm{CD}_i,\mathrm{DGD}_i)\,\kappa_m(\mathrm{CD}_k,\mathrm{DGD}_k)} \cdot$$
$$\cdot \rho_m\left(\mathrm{CD}_i,\mathrm{DGD}_i,\mathrm{CD}_k,\mathrm{DGD}_k\right)\left(2-\delta_{ik}\right) P_{i,m}\, P_{k,m}$$

wherein $\mathrm{SNR}_{\mathrm{nonlinear\,noise}}$ denotes a signal-to-noise ratio of the optical signal induced by nonlinear signal distortion, $\sigma_{\mathrm{nonlinear\,noise}}$ denotes a standard deviation of nonlinear signal distortion of the optical signal, CD denotes a chromatic dispersion value, DGD denotes a differential group delay value, $\kappa$ denotes a first distortion measure, $\rho$ denotes a second distortion measure, P denotes a signal power, $\delta$ denotes a Kronecker-Delta, j denotes a frequency channel index, m denotes a further frequency channel index, i denotes a transmission span index, k denotes a further transmission span index, $N_{span}$ denotes the transmission spans, and $N_{channel}$ denotes the frequency channels.

**12.** The apparatus (100) of claim 11, wherein the combiner (105) is configured to determine an excess optical signal-to-noise ratio of the signal induced by nonlinear signal distortion upon the basis of the signal-to-noise ratio according to the following equation:

$$\Delta\mathrm{OSNR}_j[\mathrm{dB}] = -10\lg\left(1 - \mathrm{ROSNR}_{\mathrm{btb}}\,\mathrm{SNR}^{-1}_{\mathrm{nonlinear\,noise,j}}\right)$$

wherein $\Delta\mathrm{OSNR}$ denotes the excess optical signal-to-noise ratio of the signal, $\mathrm{SNR}_{\mathrm{nonlinear\,noise}}$ denotes the signal-to-nonlinear noise power ratio, $\mathrm{ROSNR}_{\mathrm{btb}}$ denotes a reference optical signal-to-noise ratio, and j denotes a frequency channel index.

**13.** A method (200) for determining a signal distortion of an optical signal, the optical signal comprising a number of frequency channels (m), the signal distortion being introduced by an optical transmission channel having a number of transmission spans (i, k), the method (200) comprising:

providing (201) a signal power (P) of the optical signal for each frequency channel (m) and for each transmission span (i, k) to obtain a number of signal powers;
providing (203) a chromatic dispersion, CD, value for each frequency channel (m) and for each transmission span (i, k) to obtain a number of CD values, each CD value indicating a CD of the optical signal;
providing (205) a differential group delay, DGD, value for each frequency channel (m) and for each transmission span (i, k) to obtain a number of DGD values, each DGD value indicating a polarization mode dispersion of the optical signal;
determining (207) a number of first distortion measures ($\kappa$) upon the basis of the CD values and the DGD values, the first distortion measures ($\kappa$) indicating a nonlinear signal distortion of the optical signal induced on a single transmission span;
determining (209) a number of second distortion measures ($\rho$) upon the basis of the CD values and the DGD values, the second distortion measures ($\rho$) indicating a correlation between nonlinear signal distortions of the optical signal induced on transmission span (i) and on transmission span (k); and
combining (211) the signal powers, the first distortion measures ($\kappa$), and the second distortion measures ($\rho$) to obtain the signal distortion of the optical signal;
wherein the first distortion measures ($\kappa$) or the second distortion measures ($\rho$) are determined according to the following equations:

$$\kappa_i = \kappa\left(\mathrm{CD}_i = \sum_{k=1}^{i-1} D_k L_k,\; \mathrm{DGD}_i = \sqrt{\sum_{k=1}^{i-1} \mathrm{PMD}_k^2 L_k}\right) = \left\langle \left| \vec{E}^{nl}_{\mathrm{CD}_i,\mathrm{DGD}_i} - \vec{E}_0 \right|^2 \right\rangle$$

**15**

$$\rho_m\left(CD_i, DGD_i, CD_k, DGD_k\right) = Re\left\langle\left(\vec{E}^{nl}_{CD_i, DGD_i} - \vec{E}_0\right)\left(\vec{E}^{nl}_{CD_k, DGD_k} - \vec{E}_0\right)^{\dagger}\right\rangle\Big/\sqrt{\kappa_i\,\kappa_k}$$

wherein $\kappa$ denotes a first distortion measure, $\rho$ denotes a second distortion measure, CD denotes a chromatic dispersion value, DGD denotes a differential group delay value, D denotes a chromatic dispersion coefficient, PMD denotes a polarization mode dispersion coefficient, L denotes a length of a transmission span, i denotes a transmission span index, k denotes a further transmission span index, m denotes a frequency channel index, $\vec{E}^{nl}_{CD_i, DGD_i}$ denotes a distorted electrical field vector, $\vec{E}^{nl}_{CD_k, DGD_k}$ denotes a further distorted electrical field vector, and $\vec{E}_0$ denotes an undistorted electrical field vector.

14. A computer program comprising a program code for performing the method (200) according to claim 13 when executed on a computer.

**Patentansprüche**

1. Einrichtung (100) zum Bestimmen einer Signalverzerrung eines optischen Signals, wobei das optische Signal eine Anzahl an Frequenzkanälen (m) umfasst, wobei die Signalverzerrung durch einen optischen Übertragungskanal mit einer Anzahl an Übertragungspannen (i, k) eingeführt wird, wobei die Einrichtung (100) Folgendes umfasst:

einen Versorger (101), der zum Bereitstellen einer Signalleistung (P) des optischen Signals für jeden Frequenzkanal (m) und für jede Übertragungsspanne (i, k), um eine Anzahl an Signalleistungen zu erhalten, zum Bereitstellen eines chromatischen Dispersions- bzw. CD-Wertes für jeden Frequenzkanal (m) und für jede Übertragungsspanne (i, k), um eine Anzahl an CD-Werten zu erhalten, wobei jeder CD-Wert eine CD des optischen Signals angibt, und zum Bereitstellen eines differenziellen Gruppenlaufzeit- bzw. DGD(Differential Group Delay)-Wertes für jeden Frequenzkanal (m) und für jede Übertragungspanne (i, k), um eine Anzahl an DGD-Werten zu erhalten, wobei jeder DGD-Wert eine Polarisierungsmodusdispersion des optischen Signals angibt, konfiguriert ist;
einen Bestimmer (103), der zum Bestimmen einer Anzahl an ersten Verzerrungsmaßen ($\kappa$) basierend auf den CD-Werten und den DGD-Werten, wobei jedes erste Verzerrungsmaß ($\kappa$) eine nichtlineare Signalverzerrung des optischen Signals angibt, die auf einer einzigen Übertragungsspanne (i, k) eingeführt wird, und zum Bestimmen einer Anzahl an zweiten Verzerrungsmaßen ($\rho$) basierend auf den CD-Werten und den DGD-Werten, wobei jedes zweite Verzerrungsmaß ($\rho$) eine Korrelation zwischen nichtlinearen Signalverzerrungen des optischen Signals angibt, die auf einer Übertragungsspanne (i) und einer Übertragungspanne (k) eingeführt werden, konfiguriert ist; und
einen Kombinierer (105), der zum Kombinieren der Signalleistungen, der ersten Verzerrungsmaße ($\kappa$) und der zweiten Verzerrungsmaße ($\rho$) konfiguriert ist, um die Signalverzerrung des optischen Signals zu erhalten;
wobei der Bestimmer (103) zum Bestimmen der ersten Verzerrungsmaße ($\kappa$) oder der zweiten Verzerrungsmaße ($\rho$) gemäß den folgenden Gleichungen konfiguriert ist:

$$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle\left|\vec{E}^{nl}_{CD_i, DGD_i} - \vec{E}_0\right|^2\right\rangle$$

$$\rho_m\left(CD_i, DGD_i, CD_k, DGD_k\right) = Re\left\langle\left(\vec{E}^{nl}_{CD_i, DGD_i} - \vec{E}_0\right)\left(\vec{E}^{nl}_{CD_k, DGD_k} - \vec{E}_0\right)^{\dagger}\right\rangle\Big/\sqrt{\kappa_i\,\kappa_k}$$

wobei $\kappa$ ein erstes Verzerrungsmaß bezeichnet, $\rho$ ein zweites Verzerrungsmaß bezeichnet, CD einen chromatischen Dispersionswert bezeichnet, DGD einen differenziellen Gruppenlaufzeitwert bezeichnet, D einen chromatischen Dispersionskoeffizienten bezeichnet, PMD einen Polarisationsmodusdispersionskoeffizienten bezeichnet, L eine Länge einer Übertragungsspanne bezeichnet, i einen Übertragungsspannenindex bezeichnet, k einen weiteren Übertragungsspannenindex bezeichnet, m einen Frequenzkanalindex bezeichnet, $\vec{E}_{CD_i,DGD_i}^{ml}$ einen verzerrten elektrischen Feldvektor bezeichnet, $\vec{E}_{CD_k,DGD_k}^{ml}$ einen weiteren verzerrten elektrischen Feldvektor bezeichnet und $\vec{E}_0$ einen nicht verzerrten elektrischen Feldvektor bezeichnet.

2. Einrichtung (100) nach Anspruch 1, wobei die Einrichtung (100) eine Datenbank (309) zum Bereitstellen der Signalleistungen, der CD-Werte oder der DGD-Werte umfasst und wobei der Versorger (101) zum Abrufen der Signalleistungen, der CD-Werte oder der DGD-Werte aus der Datenbank (309) konfiguriert ist.

3. Einrichtung (100) nach Ansprüchen 1 oder 2, wobei der Bestimmer (103) zum Bestimmen eines verzerrten elektrischen Feldvektors des optischen Signals für jeden Frequenzkanal (m) und für jede Übertragungsspanne (i, k) konfiguriert ist, um eine Anzahl an verzerrten elektrischen Feldvektoren zu erhalten, wobei die verzerrten elektrischen Feldvektoren mit den CD-Werten und den DGD-Werten assoziiert sind und wobei der Bestimmer (103) zum Bestimmen der ersten Verzerrungsmaße (κ) oder der zweiten Verzerrungsmaße (ρ) auf der Basis der verzerrten elektrischen Feldvektoren konfiguriert ist.

4. Einrichtung (100) nach Anspruch 3, wobei der Bestimmer (103) zum Bestimmen einer linearen Signalverzerrung des optischen Signals für jeden Frequenzkanal (m) und für jede Übertragungsspanne (i, k) konfiguriert ist, um eine Anzahl an linearen Signalverzerrungen zu erhalten, und wobei der Bestimmer (103) zum Kompensieren der verzerrten elektrischen Feldvektoren durch die linearen Signalverzerrungen konfiguriert ist.

5. Einrichtung (100) nach Ansprüchen 3 oder 4, wobei der Bestimmer (103) zum Bestimmen einer durchschnittlichen nichtlinearen Phasendrehung des optischen Signals für jeden Frequenzkanal (m) und für jede Übertragungsspanne (i, k) konfiguriert ist, um eine Anzahl an nichtlinearen Phasendrehungen zu erhalten, und wobei der Bestimmer (103) zum Kompensieren der Anzahl an verzerrten elektrischen Feldvektoren durch die Anzahl nichtlinearer Phasendrehungen konfiguriert ist.

6. Einrichtung (100) nach Ansprüchen 3 bis 5, wobei der Bestimmer (103) zum Bestimmen eines nicht verzerrten elektrischen Feldvektors des optischen Signals für jeden Frequenzkanal (m) und für jede Übertragungsspanne (i, k) konfiguriert ist, um eine Anzahl an nicht verzerrten elektrischen Feldvektoren zu erhalten, wobei der Bestimmer (103) zum Kompensieren der verzerrten elektrischen Feldvektoren durch die nicht verzerrten elektrischen Feldvektoren konfiguriert ist.

7. Einrichtung (100) nach einem der Ansprüche 1 bis 6, wobei der Bestimmer (103) zum Anordnen erster ersten Verzerrungsmaße (κ) konfiguriert ist, um ein zweidimensionales Array erster Verzerrungsmaße (κ) zu bilden, und wobei der Kombinierer (105) zum Kombinieren der Signalleistungen, der ersten Verzerrungsmaße (κ) und der zweiten Verzerrungsmaße (ρ) auf der Basis des zweidimensionalen Arrays erster Verzerrungsmaße (κ) konfiguriert ist.

8. Einrichtung (100) nach einem der Ansprüche 1 bis 7, wobei der Bestimmer (103) zum Anordnen der zweiten Verzerrungsmaße (p) konfiguriert ist, um ein vierdimensionales Array zweiter Verzerrungsmaße (ρ) zu bilden, und wobei der Kombinierer (105) zum Kombinieren der Signalleistungen, der ersten Verzerrungsmaße (κ) und der zweiten Verzerrungsmaße (ρ) auf der Basis des vierdimensionalen Arrays zweiter Verzerrungsmaße (p) konfiguriert ist.

9. Einrichtung (100) nach Anspruch 8, wobei der Bestimmer (103) zum Zerlegen des vierdimensionalen Arrays zweiter Verzerrungsmaße (ρ) in ein erstes zerlegtes zweidimensionales Array zweiter Verzerrungsmaße (ρ) und ein zweites zerlegtes zweidimensionales Array zweiter Verzerrungsmaße (ρ) konfiguriert ist und wobei der Kombinierer (105) zum Kombinieren der Signalleistungen, der ersten Verzerrungsmaße (κ) und der zweiten Verzerrungsmaße (ρ) auf der Basis des ersten zerlegten zweidimensionalen Arrays zweiter Verzerrungsmaße (ρ) und des zweiten zerlegten zweidimensionalen Arrays zweiter Verzerrungsmaße (ρ) konfiguriert ist.

10. Einrichtung (100) nach Anspruch 9, wobei der Bestimmer (103) zum Zerlegen des vierdimensionalen Arrays zweiter Verzerrungsmaße (ρ) in das erste zerlegte zweidimensionale Array zweiter Verzerrungsmaße (ρ) und das zweite zerlegte zweidimensionale Array zweiter Verzerrungsmaße (ρ) gemäß der folgenden Gleichung konfiguriert ist:

$$\rho_m\left(CD_i, DGD_i, CD_k, DGD_k\right) \approx \rho_m\left(CD_i, CD_k\right) \cdot$$

$$\rho_{m,corr}\left(CD = \min\left(CD_i, CD_k\right), \Delta DGD = \sqrt{\left|DGD_i^2 - DGD_k^2\right|}\right)$$

wobei $\rho$ ein zweites Verzerrungsmaß bezeichnet, CD einen chromatischen Dispersionswert bezeichnet, DGD einen differenziellen Gruppenlaufzeitwert bezeichnet, i einen Übertragungsspannenindex bezeichnet, k einen weiteren Übertragungsspannenindex bezeichnet, m einen Frequenzkanalindex bezeichnet, $\rho_m$ ($CD_i$, $DGD_i$, $CD_k$, $DGD_k$) das vierdimensionale Array zweiter Verzerrungsmaße bezeichnet, $\rho_m$ ($CD_i$, $CD_k$) das erste zerlegte zweidimensionale Array zweiter Verzerrungsmaße bezeichnet, und $\rho_{m,corr}\left(CD = \min\left(CD_i, CD_k\right), \Delta DGD = \sqrt{\left|DGD_i^2 - DGD_k^2\right|}\right)$ das zweite zerlegte zweidimensionale Array zweiter Verzerrungsmaße bezeichnet.

11. Einrichtung (100) nach einem der Ansprüche 1 bis 11, wobei der Kombinierer (105) zum Kombinieren der Signalleistungen, der ersten Verzerrungsmaße ($\kappa$) und der zweiten Verzerrungsmaße ($\rho$) gemäß der folgenden Gleichung konfiguriert ist:

$$SNR^{-1}_{nichtlineares\ Rauschen,j} = \sigma^2_{nichtlineares\ Rauschen,j} / P_j$$
$$= \sum_{i,k=1}^{N_{Spanne}} \sum_{m=1}^{N_{Kanal}} \sqrt{\kappa_m(CD_i, DGD_i)\kappa_m(CD_k, DGD_k)} \cdot$$
$$\cdot \rho_m(CD_i, DGD_i, CD_k, DGD_k)(2 - \delta_{ik})P_{i,m}P_{k,m}$$

wobei $SNR_{nichtlineares}$ Rauschen ein Signal-Rausch-Verhältnis des optischen Signals bezeichnet, das durch eine nichtlineare Signalverzerrung eingeführt wird, $\sigma_{nichtlineares}$ Rauschen eine Standardabweichung einer nichtlinearen Signalverzerrung des optischen Signals bezeichnet, CD einen chromatischen Dispersionswert bezeichnet, DGD einen differenziellen Gruppenlaufzeitwert bezeichnet, $\kappa$ ein erstes Verzerrungsmaß bezeichnet, $\rho$ ein zweites Verzerrungsmaß bezeichnet, P eine Signalleistung bezeichnet, $\delta$ ein Kronecker-Delta bezeichnet, j einen Frequenzkanalindex bezeichnet, m einen weiteren Frequenzkanalindex bezeichnet, i einen Übertragungsspannenindex bezeichnet, k einen weiteren Übertragungsspannenindex bezeichnet, $N_{Spanne}$ die Übertragungsspanne bezeichnet und $N_{Kanal}$ die Frequenzkanäle bezeichnet.

12. Einrichtung (100) nach Anspruch 11, wobei der Kombinierer (105) zum Bestimmen eines optischen Überschuss-Signal-Rausch-Verhältnisses des Signals, das durch nichtlineare Signalverzerrung eingeführt wird, auf der Basis des Signal-Rausch-Verhältnisses gemäß der folgenden Gleichung konfiguriert ist:

$$\Delta OSNR_j[dB] = -10 lg\left(1 - ROSNR_{btb} SNR^{-1}_{nichtlineares\ Rauschen,j}\right)$$

wobei $\Delta OSNR$ das optische Überschuss-Signal-Rausch-Verhältnis des Signals bezeichnet, $SNR_{nichtlineares\ Rauschen}$ das Signal-Rausch-Leistungsverhältnis bezeichnet, $ROSNR_{btb}$ ein optisches Referenz-Signal-Rausch-Verhältnis bezeichnet und j einen Frequenzkanalindex bezeichnet.

13. Verfahren (200) zum Bestimmen einer Signalverzerrung eines optischen Signals, wobei das optische Signal eine Anzahl an Frequenzkanälen (m) umfasst, wobei die Signalverzerrung durch einen optischen Übertragungskanal mit einer Anzahl an Übertragungspannen (i, k) eingeführt wird, wobei das Verfahren (200) Folgendes umfasst:

Bereitstellen (201) einer Signalleistung (P) des optischen Signals für jeden Frequenzkanal (m) und für jede Übertragungsspanne (i, k), um eine Anzahl an Signalleistungen zu erhalten;
Bereitstellen (203) eines chromatischen Dispersions- bzw. CD-Wertes für jeden Frequenzkanal (m) und für jede Übertragungsspanne (i, k), um eine Anzahl an CD-Werten zu erhalten, wobei jeder CD-Wert eine CD des optischen Signals angibt;
Bereitstellen (205) eines differenziellen Gruppenlaufzeit- bzw. DGD-Wertes für jeden Frequenzkanal (m) und für jede Übertragungsspanne (i, k), um eine Anzahl an DGD-Werten zu erhalten, wobei jeder DGD-Wert eine Polarisierungsmodusdispersion des optischen Signals angibt;

Bestimmen (207) einer Anzahl an ersten Verzerrungsmaßen (κ) basierend auf den CD-Werten und den DGD-Werten, wobei das erste Verzerrungsmaß (κ) eine nichtlineare Signalverzerrung des optischen Signals angibt, die auf einer einzigen Übertragungsspanne eingeführt wird;

Bestimmen (209) einer Anzahl an zweiten Verzerrungsmaßen (ρ) basierend auf den CD-Werten und den DGD-Werten, wobei das zweite Verzerrungsmaß (ρ) eine Korrelation zwischen nichtlinearen Signalverzerrungen des optischen Signals angibt, die auf einer Übertragungsspanne (i) und einer Übertragungspanne (k) eingeführt werden; und

Kombinieren (211) der Signalleistungen, der ersten Verzerrungsmaße (κ) und der zweiten Verzerrungsmaße (ρ), um die Signalverzerrung des optischen Signals zu erhalten;

wobei die ersten Verzerrungsmaße (κ) oder die zweiten Verzerrungsmaße (ρ) gemäß den folgenden Gleichungen bestimmt werden:

$$\kappa_i = \kappa\left( CD_i = \sum_{k=1}^{i-1} D_k L_k, DGD_i = \sqrt{\sum_{k=1}^{i-1} PMD_k^2 L_k} \right) = \left\langle \left| \vec{E}_{CD_i,DGD_i}^{nl} - \vec{E}_0 \right|^2 \right\rangle$$

$$\rho_m\left( CD_i, DGD_i, CD_k, DGD_k \right) = Re\left\langle \left( \vec{E}_{CD_i,DGD_i}^{nl} - \vec{E}_0 \right)\left( \vec{E}_{CD_k,DGD_k}^{nl} - \vec{E}_0 \right)^\dagger \right\rangle \Big/ \sqrt{\kappa_i\, \kappa_k}$$

wobei κ ein erstes Verzerrungsmaß bezeichnet, ρ ein zweites Verzerrungsmaß bezeichnet, CD einen chromatischen Dispersionswert bezeichnet, DGD einen differenziellen Gruppenlaufzeitwert bezeichnet, D einen chromatischen Dispersionskoeffizienten bezeichnet, PMD einen Polarisationsmodusdispersionskoeffizienten bezeichnet, L eine Länge einer Übertragungsspanne bezeichnet, i einen Übertragungspannenindex bezeichnet, k einen weiteren Übertragungsspannenindex bezeichnet, m einen Frequenzkanalindex bezeichnet, $\vec{E}_{CD_i,DGD_i}^{nl}$ einen verzerrten elektrischen Feldvektor bezeichnet, $\vec{E}_{CD_k,DGD_k}^{nl}$ einen weiteren verzerrten elektrischen Feldvektor bezeichnet und $\vec{E}_0$ einen nicht verzerrten elektrischen Feldvektor bezeichnet.

14. Computerprogramm, das einen Programmcode zum Durchführen des Verfahrens (200) nach Anspruch 13, wenn es auf einem Computer ausgeführt wird, umfasst.

**Revendications**

1. Appareil (100) pour déterminer une distorsion de signal d'un signal optique, le signal optique comprenant un certain nombre de canaux de fréquence (m), la distorsion de signal étant introduite par un canal de transmission optique ayant un certain nombre d'intervalles de transmission (i, k), l'appareil (100) comprenant :

un fournisseur (101) configuré pour fournir une puissance de signal (P) du signal optique pour chaque canal de fréquence (m) et pour que chaque intervalle de transmission (i, k) obtienne un certain nombre de puissances de signal, pour fournir une valeur de dispersion chromatique, CD, pour chaque canal de fréquence (m) et pour que chaque intervalle de transmission (i, k) obtienne un nombre de valeurs de CD, chaque valeur de CD indiquant une CD du signal optique, et pour fournir une valeur de retard de groupe différentiel, DGD, pour chaque canal de fréquence (m) et pour que chaque intervalle de transmission (i, k) obtienne un certain nombre de valeurs de DGD, chaque valeur de DGD indiquant une dispersion de mode de polarisation du signal optique ;
un dispositif de détermination (103) configuré pour déterminer un certain nombre de premières mesures de distorsion (κ) sur la base des valeurs de CD et des valeurs de DGD, chaque première mesure de distorsion (κ) indiquant une distorsion de signal non linéaire du signal optique induite sur un seul intervalle de transmission (i, k), et pour déterminer un certain nombre de secondes mesures de distorsion (ρ) sur la base des valeurs de CD et des valeurs de DGD, chaque seconde mesure de distorsion (ρ) indiquant une corrélation entre des distorsions de signal non linéaires du signal optique induites sur l'intervalle de transmission (i) et sur l'intervalle de transmission (k) ; et

un combineur (105) configuré pour combiner les puissances de signal, les premières mesures de distorsion ($\kappa$) et les secondes mesures de distorsion ($\rho$) pour obtenir la distorsion de signal du signal optique ;
le dispositif de détermination (103) étant configuré pour déterminer les premières mesures de distorsion ($\kappa$) ou les secondes mesures de distorsion ($\rho$) selon les équations suivantes :

$$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle \left| \vec{E}_{CD_i, DGD_i}^{nl} - \vec{E}_0 \right|^2 \right\rangle$$

$$\rho_m\left(CD_i, DGD_i, CD_k, DGD_k\right) = \mathrm{Re}\left\langle \left(\vec{E}_{CD_i, DGD_i}^{nl} - \vec{E}_0\right)\left(\vec{E}_{CD_k, DGD_k}^{nl} - \vec{E}_0\right)^{\dagger} \right\rangle \bigg/ \sqrt{\kappa_i \, \kappa_k}$$

dans lesquelles, $\kappa$ représente une première mesure de distorsion, $\rho$ représente une seconde mesure de distorsion, CD représente une valeur de dispersion chromatique, DGD représente une valeur de retard de groupe différentiel, D représente un coefficient de dispersion chromatique, PMD représente un coefficient de dispersion de mode de polarisation, L représente une longueur d'un intervalle de transmission, i représente un indice d'intervalle de transmission, k représente un autre indice d'intervalle de transmission, m représente un indice de canal de fréquence, $\vec{E}_{CD_i, DGD_i}^{nl}$ représente un vecteur de champ électrique déformé, $\vec{E}_{CD_k, DGD_k}^{nl}$ représente un autre vecteur de champ électrique déformé et $\vec{E}_0$ représente un vecteur de champ électrique non déformé.

2. Appareil (100) selon la revendication 1, l'appareil (100) comprenant une base de données (309) pour fournir les puissances de signal, les valeurs de CD ou les valeurs de DGD, et le fournisseur (101) étant configurée pour récupérer les puissances de signal, les valeurs de CD ou les valeurs de DGD à partir de la base de données (309).

3. Appareil (100) selon la revendication 1 ou 2, le dispositif de détermination (103) étant configuré pour déterminer un vecteur de champ électrique déformé du signal optique pour chaque canal de fréquence (m) et pour que chaque intervalle de transmission (i, k) obtienne un certain nombre de vecteurs de champ électrique déformés, les vecteurs de champ électrique déformés étant associés aux valeurs de CD et aux valeurs de DGD, et le dispositif de détermination (103) étant configuré pour déterminer les premières mesures de distorsion ($\kappa$) ou les secondes mesures de distorsion ($\rho$) sur la base des vecteurs de champ électrique déformés.

4. Appareil (100) selon la revendication 3, le dispositif de détermination (103) étant configuré pour déterminer une distorsion de signal linéaire du signal optique pour chaque canal de fréquence (m), et pour que chaque intervalle de transmission (i, k) obtienne un certain nombre de distorsions de signal linéaire, et le dispositif de détermination (103) étant configuré pour compenser les vecteurs de champ électrique déformés par les distorsions de signal linéaire.

5. Appareil (100) selon la revendication 3 ou 4, le dispositif de détermination (103) étant configuré pour déterminer une rotation de phase non linéaire moyenne du signal optique pour chaque canal de fréquence (m), et pour que chaque intervalle de transmission (i, k) obtienne un certain nombre de rotations de phase non linéaires, et le dispositif de détermination (103) étant configuré pour compenser le nombre de vecteurs de champ électrique déformés par le nombre de rotations de phase non linéaires.

6. Appareil (100) selon les revendications 3 à 5, le dispositif de détermination (103) étant configuré pour déterminer un vecteur de champ électrique non déformé du signal optique pour chaque canal de fréquence (m), et pour que chaque intervalle de transmission (i, k) obtienne un certain nombre de vecteurs de champ électrique non déformés, et le dispositif de détermination (103) étant configuré pour compenser les vecteurs de champ électrique déformés par les vecteurs de champ électrique non déformés.

7. Appareil (100) selon l'une quelconque des revendications 1 à 6, le dispositif de détermination (103) étant configuré pour agencer les premières mesures de distorsion ($\kappa$) pour former un réseau bidimensionnel de premières mesures de distorsion ($\kappa$), et le combineur (105) étant configuré pour combiner les puissances de signal, les premières

mesures de distorsion ($\kappa$) et les secondes mesures de distorsion ($\rho$) sur la base du réseau bidimensionnel de premières mesures de distorsion ($\kappa$).

8. Appareil (100) selon l'une quelconque des revendications 1 à 7, le dispositif de détermination (103) étant configuré pour agencer les secondes mesures de distorsion ($\rho$) pour former un réseau quadridimensionnel de secondes mesures de distorsion ($\rho$), et le combineur (105) étant configuré pour combiner les puissances de signal, les premières mesures de distorsion ($\kappa$) et les secondes mesures de distorsion ($\rho$) sur la base du réseau quadridimensionnel de secondes mesures de déformation ($\rho$).

9. Appareil (100) selon la revendication 8, le dispositif de détermination (103) étant configuré pour décomposer le réseau quadridimensionnel de secondes mesures de distorsion ($\rho$) en un premier réseau bidimensionnel décomposé de secondes mesures de distorsion ($\rho$) et un second réseau bidimensionnel décomposé de secondes mesures de distorsion ($\rho$), et le combineur (105) étant configuré pour combiner les puissances de signal, les premières mesures de distorsion ($\kappa$) et les secondes mesures de distorsion ($\rho$) sur la base du premier réseau bidimensionnel décomposé de secondes mesures de distorsion (p) et du second réseau bidimensionnel décomposé de secondes mesures de distorsion (p).

10. Appareil (100) selon la revendication 9, le dispositif de détermination (103) étant configuré pour décomposer le réseau quadridimensionnel de secondes mesures de distorsion (p) dans le premier réseau bidimensionnel décomposé de secondes mesures de distorsion (p) et le second réseau bidimensionnel décomposé de secondes mesures de distorsion (p) selon l'équation suivante :

$$\rho_m\left(CD_i, DGD_i, CD_k, DGD_k\right) \approx \rho_m\left(CD_i, CD_k\right) \cdot$$
$$\rho_{m,corr}\left(CD = \min\left(CD_i, CD_k\right), \Delta DGD = \sqrt{\left|DGD_i^2 - DGD_k^2\right|}\right)$$

dans laquelle, $\rho$ représente une seconde mesure de distorsion, CD représente une valeur de dispersion chromatique, DGD représente une valeur de retard de groupe différentiel, i représente un indice d'intervalle de transmission, k représente un autre indice d'intervalle de transmission, m représente un indice de canal de fréquence, $\rho_m$ ($CD_i$, $DGD_i$, $CD_k$, $DGD_k$) représente le réseau quadridimensionnel de secondes mesures de distorsion, $\rho_m$ ($CD_i$, $CD_k$) représente le premier réseau bidimensionnel décomposé de secondes mesures de distorsion, et

$$\rho_{m,corr}\left(CD = \min\left(CD_i, CD_k\right), \Delta DGD = \sqrt{\left|DGD_i^2 - DGD_k^2\right|}\right)$$

représente le second réseau bidimensionnel décomposé de secondes mesures de distorsion.

11. Appareil (100) selon l'une quelconque des revendications 1 à 11, le combineur (105) étant configuré pour combiner les puissances de signal, les premières mesures de distorsion ($\kappa$) et les secondes mesures de distorsion (p) selon l'équation suivante :

$$SNR^{-1}_{bruit\,non\,linéaire,j} = \sigma^2_{bruit\,non\,linéaire,j} / P_j = \sum_{i,k=1}^{N_{intevalle}} \sum_{m=1}^{N_{canal}} \sqrt{\kappa_m\left(CD_i, DGD_i\right)\kappa_m\left(CD_k, DGD_k\right)} \cdot$$
$$\cdot \rho_m\left(CD_i, DGD_i, CD_k, DGD_k\right)\left(2 - \delta_{ik}\right) P_{i,m}\, P_{k,m}$$

dans laquelle le rapport signal sur bruit $SNR_{bruit\,non\,linéaire}$ représente un rapport signal sur bruit du signal optique induit par une distorsion de signal non linéaire, $\sigma_{bruit\,non\,linéaire}$ représente un écart-type de distorsion de signal non linéaire du signal optique, CD représente une valeur de dispersion chromatique, DGD représente une valeur de retard de groupe différentiel, $\kappa$ représente une première mesure de distorsion, $\rho$ représente une seconde mesure de distorsion, P représente une puissance de signal, $\delta$ représente le symbole de Kronecker, j représente un indice de canal de fréquence, m représente un autre indice de canal de fréquence, i représente un indice d'intervalle de transmission, k représente un autre indice d'intervalle de transmission, $N_{intervalle}$ représente les intervalles de transmission, et $N_{canal}$ représente les canaux de fréquence.

**12.** Appareil (100) selon la revendication 11, le combineur (105) étant configuré pour déterminer un rapport signal sur bruit optique en excès du signal induit par une distorsion de signal non linéaire sur la base du rapport signal sur bruit selon l'équation suivante :

$$\Delta OSNR_j[dB] = -10\lg\left(1 - ROSNR_{btb}\,SNR_{bruit\ non\ linéaire,\ j}^{-1}\right)$$

dans laquelle $\Delta OSNR$ représente le rapport signal sur bruit optique en excès du signal, $SNR_{bruit\ non\ linéaire}$ représente le rapport de puissance de signal sur bruit non linéaire, $ROSNR_{btb}$ représente un rapport signal sur bruit optique de référence et j représente un indice de canal de fréquence.

**13.** Procédé (200) pour déterminer une distorsion de signal d'un signal optique, le signal optique comprenant un certain nombre de canaux de fréquence (m), la distorsion de signal étant introduite par un canal de transmission optique ayant un certain nombre d'intervalles de transmission (i, k), le procédé (200) comprenant :

la fourniture (201) d'une puissance de signal (P) du signal optique pour chaque canal de fréquence (m), et pour que chaque intervalle de transmission (i, k) obtienne un certain nombre de puissances de signal ;
la fourniture (203) d'une valeur de dispersion chromatique, CD, pour chaque canal de fréquence (m), et pour que chaque intervalle de transmission (i, k) obtienne un certain nombre de valeurs de CD, chaque valeur de CD indiquant une CD du signal optique ;
la fourniture (205) d'une valeur de retard de groupe différentiel, DGD, pour chaque canal de fréquence (m), et pour que chaque intervalle de transmission (i, k) obtienne un certain nombre de valeurs de DGD, chaque valeur de DGD indiquant une dispersion de mode de polarisation du signal optique ;
la détermination (207) d'un certain nombre de premières mesures de distorsion ($\kappa$) sur la base des valeurs de CD et des valeurs de DGD, les premières mesures de distorsion ($\kappa$) indiquant une distorsion de signal non linéaire du signal optique induite sur un seul intervalle de transmission ;
la détermination (209) d'un certain nombre de secondes mesures de distorsion (p) sur la base des valeurs de CD et des valeurs de DGD, les secondes mesures de distorsion (p) indiquant une corrélation entre les distorsions de signal non linéaires du signal optique induites sur l'intervalle de transmission (i) et sur l'intervalle de transmission (k) ; et
la combinaison (211) des puissances de signal, des premières mesures de distorsion ($\kappa$) et des secondes mesures de distorsion (p) pour obtenir la distorsion de signal du signal optique ;
les premières mesures de distorsion ($\kappa$) ou les secondes mesures de distorsion (p) étant déterminées selon les équations suivantes :

$$\kappa_i = \kappa\left(CD_i = \sum_{k=1}^{i-1} D_k L_k, DGD_i = \sqrt{\sum_{k=1}^{i-1} PMD_k^2 L_k}\right) = \left\langle\left|\vec{E}_{CD_i,DGD_i}^{nl} - \vec{E}_0\right|^2\right\rangle$$

$$\rho_m\left(CD_i, DGD_i, CD_k, DGD_k\right) = Re\left\langle\left(\vec{E}_{CD_i,DGD_i}^{nl} - \vec{E}_0\right)\left(\vec{E}_{CD_k,DGD_k}^{nl} - \vec{E}_0\right)^\dagger\right\rangle \Big/ \sqrt{\kappa_i \kappa_k}$$

dans lesquelles, $\kappa$ représente une première mesure de distorsion, $\rho$ représente une seconde mesure de distorsion, CD représente une valeur de dispersion chromatique, DGD représente une valeur de retard de groupe différentiel, D représente un coefficient de dispersion chromatique, PMD représente un coefficient de dispersion de mode de polarisation, L représente une longueur d'un intervalle de transmission, i représente un indice d'intervalle de transmission, k représente un autre indice d'intervalle de transmission, m représente un indice de canal de fréquence, $\vec{E}_{CD_i,DGD_i}^{nl}$ représente un vecteur de champ électrique déformé, $\vec{E}_{CD_i,DGD_i}^{nl}$ représente un autre vecteur de champ électrique déformé et $\vec{E}_0$ représente un vecteur de champ électrique non déformé.

**14.** Programme d'ordinateur comprenant un code de programme pour mettre en oeuvre le procédé (200) selon la revendication 13 lorsqu'il est exécuté sur un ordinateur.

Fig. 1

Fig. 2

Fig. 3

401

403

405

Fig. 4

Fig. 5

Fig. 6

Fig. 7

Fig. 8

801

Fig. 9

Fig. 10

Fig. 11

Fig. 12

kappa enhancement
SSMF 50GHz channel

1301

Correlation of nl distortions
from 50GHz spaced neighbor

1303

Fig. 13

EP 3 146 653 B1

Fig. 14

EP 3 146 653 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090135408 A

- US 20040052522 A

**Non-patent literature cited in the description**

- **P. POGGIOLINI ; G. BOSCO ; A. CARENA ; V. CURRI ; F. FORGHIERI.** a Gaussian noise (GN) model of nonlinear interference is described. *A Detailed Analytical Derivation of the GN Model of Non-Linear Interference in Coherent Optical Transmission Systems*

- **E. SEVE ; P. RAMANTANIS ; J.-C. ANTONA ; E. GRELLIER ; O. RIVAL ; F. VACONDIO ; S. BIGO.** Semi-Analytical Model for the Performance Estimation of 100Gb/s PDM-QPSK Optical Transmission Systems without Inline Dispersion Compensation and Mixed Fiber Types. *Proc. ECOC,* 2013
- **P. SERENA ; N. ROSSI ; A. BONONI.** Nonlinear Penalty Reduction Induced by PMD in 112Gbit/s WDM PDM-QPSK Coherent Systems. *Proc. ECOC,* 2009